# EUROPÄISCHE PATENTSCHRIFT

(11) **EP 1 233 183 B1**
(45) Veröffentlichungstag und Bekanntmachung des Hinweises auf die Patenterteilung: **15.11.2006**
(21) Anmeldenummer: 02000763.9
(22) Anmeldetag: 14.01.2002
(51) Int. Cl.: F04B 39/12, F04B 39/16, F04B 49/24, F04B 41/00

(54) **Druckluftregeleinrichtung**
Compressed air control system
Systeme de regulation d'air comprime

(30) Priorität: 13.02.2001 DE 20102436 U
(43) Veröffentlichungstag der Anmeldung: 21.08.2002
(73) Patentinhaber: AMK Arnold Müller GmbH & Co.KG, 73230 Kirchheim / Teck (DE)
(72) Erfinder: Müller, Arnold, 73230 Kirchheim/ Teck (DE)
(74) Vertreter: Kratzsch, Volkhard

(56) Entgegenhaltungen:
- DE-A- 3 216 329
- US-A- 4 111 609
- US-A- 4 755 196
- US-A- 5 252 034
- US-A- 5 600 953
- US-A- 6 074 177

## Beschreibung

Die Erfindung bezieht sich auf eine Druckluftregeleinrichtung mit den Merkmalen im Oberbegriff des Anspruchs 1.

Bei bekannten Druckluftregeleinrichtungen ist für die Luftführung beim Entleeren eine eigenständige Leitung versehen, die von einer Auslassöffnung des Gehäuses des Lufttrockners ausgeht und zur Ansaugleitung des Kompressors als Druckmittelquelle geführt ist, so dass die Entlüftung beim Entleeren über diesen Weg geschieht. Diese besondere Leitung ist störend und aufwendig. Sie bedarf jeweiliger Anschlüsse. Nachteilig ist dabei auch, dass aufgrund dieser Luftführung beim Entleeren Geräusche entstehen, die als störend empfunden werden. Bekannte Lufttrockner sind außerdem so gestaltet, dass beim Entleeren nur ein relativ kleiner Luftdurchsatz pro Zeiteinheit erreichbar ist, so dass das Entleeren eines Anschlusselements, eines Verbrauchers od.dergl., z.B. ein oder mehrerer Luftfedern einer Fahrzeugluftfederung, sehr viel Zeit in Anspruch nimmt. Dies macht sich erst recht bei großen Volumina der Anschlusselemente, z.B. Luftfedern, bemerkbar, z.B. bei Geländefahrzeugen, die eine Niveauabsenkung über größere Hubwege ermöglichen und bei denen daher erst recht große Luftmengen pro Zeiteinheit beim Absenken und somit beim Entleeren abgeführt werden müssen.

Aus der US-5 600 953 A ist eine Druckregeleinrichtung der eingangs genannten Art bekannt, mit einem Lufttrockner, in dessen Gehäuse ein etwa topfförmiger Trockenbehälter enthalten ist, dessen Inneres über das Gehäuse einerseits mit einer Druckmittelquelle und andererseits mit einem Anschlußelement in Form z. B. einer Luftfeder über ein zu diesem Anschlusselement hin öffnendes Ventil verbindbar ist. Das Gehäuse weist mindestens einen Lufteinlass sowie mindestens einen Luftauslass jeweils für die Druckluft auf Die Druckluft wird zum Füllen des mindestens einen Anschlusselements in einer Strömungsrichtung vom Lufteinlass durch den Trockenbehälter hindurch zum Luftauslass geführt und von dort zu dem mindestens einen Anschlusselement. Zum Entleeren wird die Druckluft in entgegengesetzter Strömungsrichtung vom Luftauslass her durch den Trockenbehälter und das Gehäuse und aus letzterem abgeführt. Zur Steuerung sind zwei steuerbare Wegeventile für das Entleeren vorgesehen, die in das Gehäuse des Lufttrockners integriert und eingebaut sind und von denen zumindest ein steuerbares Wegeventil mit seinem Ventilglied einen im Gehäuse längs dieses verlaufenden Kanal steuert. Beim Füllen ist dieser Kanal als Zufuhrkanal wirksam. Beim gegensinnigen Entleeren wirkt dieser Kanal als Abführkanal.

Zum Füllen des mindestens einen Anschlusselements ist es erforderlich, dass erste steuerbare Wegeventil, das ein Füllventil darstellt, zu öffnen. Dieses sitzt am in Strömungsrichtung gesehen hinteren Ende des Kanals, der beim Füllen als Zufuhrkanal dient. Das zweite steuerbare Wegeventil, das als Entleerventil dient, muss beim Füllen geschlossen sein. Bei geöffnetem Füllventil wird zum Füllen die Druckluft vom Kompressor aus dessen Auslass durch einen Lufteinlass in das Gehäuse eingeleitet. Die Luft passiert im Gehäuse den Trockenbehälter und gelangt nach automatischem öffnen eines Rückschlagventils am Eingang des Kanals in letzteren hinein, passiert diesen Kanal aufgrund des geöffneten Füllventils und gelangt hiernach zu dem mindestens einen Anschlusselement.

Zum Füllen muss somit das Füllventil in Öffnungsstellung gesteuert werden. Das Entleerventil hingegen muss geschlossen gehalten werden. Der Luftdurchsatz beim Füllen wird durch die Dimensionierung des Füllventils bestimmt, das trotz gewünschten großen Luftdurchsatzes zum Füllen schon aus Kostengründen und wegen des großen Bauvolumens nicht so groß wie gewünscht gestaltet werden kann. Nachteilig ist ferner der erhebliche Steuerungsaufwand.

Zum Entleeren des mindestens einen Anschlusselements muss wiederum das Füllventil geöffnet werden, damit die Druckluft durch dieses und von dort in den Abführkanal gelangen kann. Hiernach passiert die Druckluft das Gehäuse und hierbei den darin befindlichen Trockenbehälter. Die Druckluft wird durch eine Drossel auf geringeres Druckniveau gebracht und durchströmt das an den Abführkanal anschließende Gehäuse und den darin befindlichen Trockenbehälter mit reduziertem Druck. Zum Entleeren muss ferner das zweite steuerbare Ventil, das als Entleerventil dient, ebenfalls geöffnet werden. Die Luft wird durch das Entleerventil in einen Entleerkanal und von diesem in die Atmosphäre abgeführt. Bei dieser bekannten Druckluftregeleinrichtung ist in hohem Maße nachteilig, dass sowohl zum Füllen als auch zum Entleeren jeweils beide steuerbare Wegeventile gesteuert werden müssen. Die Luftmenge zum Füllen und insbesondere beim Entleeren wird von der Gestaltung dieser beiden Ventile bestimmt, die für einen insbesondere beim Entleeren angestrebten großen Luftdurchsatz dementsprechend groß dimensioniert sein sollten. Dem stehen Gewichts, Platz- und Kostengründe entgegen. Daher hat auch diese bekannte Druckluftregeleinrichtung die eingangs erläuterten Nachteile. Das Entleeren eines Anschlusselements nimmt aus den genannten Gründen sehr viel Zeit in Anspruch.

Der Erfindung liegt die Aufgabe zugrunde, eine Druckluftregeleinrichtung der eingangs genannten Art zu schaffen, die den genannten Problemen begegnet und Abhilfe schafft.

Die Aufgabe ist bei einer Druckluftregeleinrichtung der eingangs genannten Art gemäß der Erfindung durch die Merkmale im Anspruch 1 gelöst. Weitere besondere Erfindungsmerkmale ergeben sich aus den weiteren Ansprüchen.

Weitere Einzelheiten und Vorteile der Erfindung ergeben sich aus der nachfolgenden Beschreibung, auf die zur Vermeidung von Wiederholungen insbesondere erzielter Vorteile hiermit ausdrücklich verwiesen wird.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:
- Fig. 1: einen schematischen Schnitt eines aus Antriebsmotor, Kompressor und Lufttrockner mit Druckluftregeleinrichtung bestehenden Druckluftaggregats gemäß einem ersten Ausführungsbeispiel,
- Fig. 2: eine teilweise geschnittene Seitenansicht in Pfeilrichtung II in Fig. 1,
- Fig. 3 und 4: jeweils eine schematische stimseitige Ansicht des Gehäuses des Lufttrockners,
- Fig. 5 und 5a: eine schematische Seitenansicht bzw. stirnseitige Ansicht der Innenseite eines Trockenbehälters des Lufttrockners,
- Fig. 6: einen schematischen Schnitt einer Einzelheit der Druckluftregeleinrichtung entsprechend einem zweiten Ausführungsbeispiel,
- Fig. 7: einen schematischen Schaltplan eines Lufttrockners gemäß einem weiteren, abgewandelten Ausführungsbeispiel.

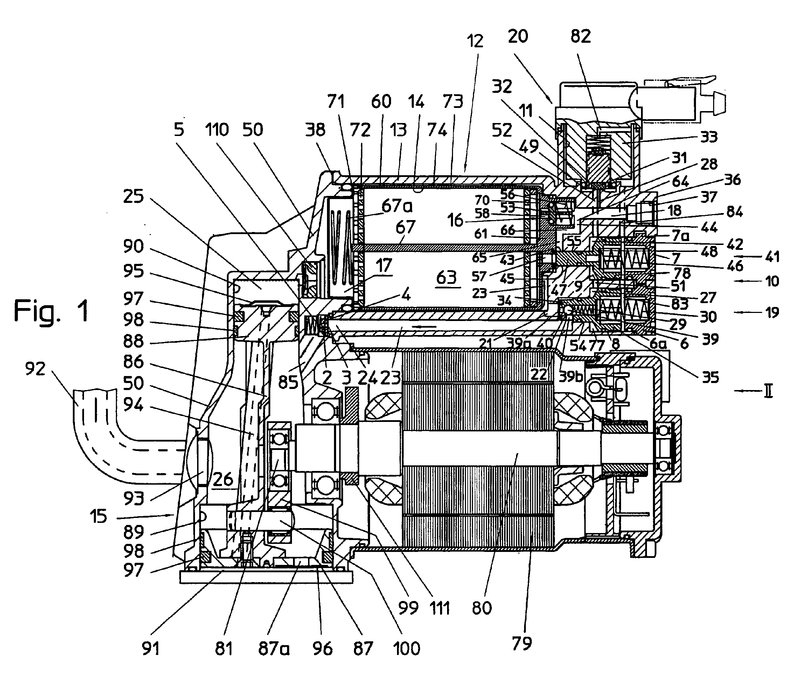

In Fig. 1 bis 5 ist schematisch ein Druckluftaggregat gezeigt, das eine Druckmittelquelle 15 in Form eines Kompressors, einen elektrischen Hochleistungsmotor 79 zum Antrieb des Kompressors 15 sowie einen Lufttrockner 12 mit einer integrierten Druckluftregeleinrichtung 10 aufweist. Das Druckluftaggregat ist beispielsweise für Luftfedern von Fahrzeugen, die mit einer Luftfederung bei allen vier Rädern ausgestattet sind, mit besonderem Vorteil geeignet. An das Druckluftaggregat werden üblicherweise Anschlusselemente, z.B. ein Druckspeicher und daran anschließend mehrere Luftfedern, angeschlossen, wobei diese Anschlusselemente hier nicht weiter dargestellt sind.

Der Lufttrockner 12 weist ein etwa topfförmiges Gehäuse 13 mit freiem Innenraum 14 auf, das am in Fig. 1 linken Ende offen ist und mit einer dort vorgesehenen Stirnseite 38 unmittelbar an ein Gehäuse 50 des Kompressors 15 angesetzt ist. Das in Fig. 1 rechte Ende 36 des Gehäuses 13 ist bis auf nachfolgend erläuterte Besonderheiten geschlossen und enthält ein erstes steuerbares Wegeventil 19 zur Luftführung beim Entleeren z.B. mindestens einer Luftfeder, ferner ein zweites steuerbares Wegeventil 20 für die Ansteuerung des ersten Wegeventils 19 mit dem Druck beim Entleeren und ferner ein drittes steuerbares Wegeventil 41, das zusammen mit dem zweiten steuerbaren Wegeventil 20 ein vorgesteuertes Ventil darstellt. Das erste Wegeventil 19, das zweite Wegeventil 20 und das dritte Wegeventil 41 sind allesamt in das Gehäuse 13 des Lufttrockners 12 im Bereich des Endes 36 integriert und eingebaut. Sie befinden sich somit alle am in Fig. 1 rechten Ende.

Im Inneren 14 des Gehäuses 13 ist ein hineinpassender, etwa topfförmiger Trockenbehälter 60 enthalten, dessen Inneres 63 üblicherweise mit einem hier nicht weiter gezeigten Granulat gefüllt ist. Der Trockenbehälter 60 ist am in Fig. 1 linken Ende 71 geöffnet und am gegenüberliegenden rechten Ende mittels eines Bodens 61 verschlossen, der einstückig mit der etwa zylindrischen Topfwandung 74 ist. Im Bereich des linken Endes 71 ist das enthaltene Granulat mittels einer Auslässe 72 enthaltenden Abschlussplatte gehalten, die auf einem zentralen Stab 67 zentriert und daran endseitig mittels einer Federklammer 67a od.dergl. befestigt ist. Die das Granulat sichernde Abschlussplatte des Trockenbehälters 60 steht über die Federklammer 67a oder statt dessen über eine andere, nicht gezeigte Feder unter Federdruck, wodurch das Granulat entsprechend beaufschlagt ist.

Das Innere 63 des Trockenbehälters 60 ist über einen gehäuseseitigen Lufteinlass 17 mit der Druckmittelquelle in Form des Kompressors 15 verbunden und am anderen Ende im Bereich des Bodens 61 über ein dortiges Ventil 16 mit einem Luftauslass 18 im Gehäuse 13 verbunden, wobei das Ventil 16 unter dem Druck zum Luftauslass 18 hin gegen die Wirkung einer Feder 56 öffnen kann. Zum Füllen des nicht gezeigten mindestens einen Anschlusselements wird vom Kompressor 15 erzeugte Druckluft, die über den Lufteinlass 17 in das Gehäuse 13 gelangt und von dort das Innere 63 des Trockenbehälters 60 passiert, durch den Trockenbehälter 60 und das Gehäuse 13 hindurch unter Öffnung des Ventils 16 zum Luftauslass 18 und von dort zum nicht weiter gezeigten mindestens einen Anschlusselement geführt. Beim Passieren des Lufttrockners 12 wird die Luft dadurch getrocknet, dass das Granulat im Trockenbehälter 60 in der Luft enthaltene Feuchtigkeit aufnimmt. Zum Entleeren z.B. mindestens einer Luftfeder als Anschlusselement wird die Luft in entgegengesetzter Strömungsrichtung vom Luftauslass 18 her durch das Ende 36 des Gehäuses 13, durch den Trockenbehälter 60 und aus letzterem und aus dem Gehäuse 13 abgeführt. Die Vorgänge beim Füllen und beim Entleeren werden von der Druckluftregeleinrichtung 10 gesteuert. Das erste steuerbare Wegeventil 19 dient beim Entleeren als Ablassventil. Das zweite steuerbare Wegeventil 20 dient der Ansteuerung des ersten Wegeventils 19 mit dem Druck beim Entleeren. Das erste Wegeventil 19 steuert mit seinem Ventilglied 34 einen Kanal 23 im Gehäuse 13, dessen Einlass von einer zum Gehäuseinneren 14 hin offenen ersten Gehäuseöffnung 21 und dessen Auslass von einer zweiten Gehäuseöffnung 22 gebildet ist, an die sich ein im Gehäuse 13 ausgebildeter Abführkanal 23 anschließt, der mit mindestens einer Ausgangsöffnung 24 in das Gehäuse 50, und hierbei mit Vorzug in den Saugraum 26, des daran anschließenden Kompressors 15 mündet und in dieser Weise beim Entleeren der Entlüftung in den Saugraum 28 dient. Der mit dem Gehäuse 13 einstückige Abführkanal 23 verläuft längs des Gehäuses 13 vom in Fig. 1 rechten Ende 36 zum Bereich der links befindlichen Stirnseite 38. Dieser in das Gehäuse 13 integrierte Abführkanal 23 macht besondere äußere zu verlegende Leitungen, Schläuche od.dergl. für die Abluftführung entbehrlich. Dadurch ist der Aufwand reduziert und das Gehäuse 13 des Lufttrockners 12 einfacher, kostengünstiger und kompakter. Besondere Anschlüsse für die Entlüftung sind entbehrlich. Der Abführkanal 23 weist einen großen Durchlassquerschnitt auf und ermöglicht so einen großen Luftdurchsatz, der eine schnelle Entleerung angeschlossener Anschlusselemente, z.B. Luftfedern, ermöglicht, selbst dann, wenn diese ein überaus großes Füllvolumen aufweisen.

In das Ventilglied 34 des ersten steuerbaren Wegeventils 19 ist ein Überdruckventil 39 integriert, das für einen Öffnungsdruck gleich oder größer als der Betriebsdruck, z.B. etwa 18 bis 20 bar, ausgebildet ist. Das Überdruckventil 39 hat einen Einlasskanal 39a z.B. in Form einer koaxialen Bohrung, die mit dem Einlass 21 des vom Ventilglied 34 gesteuerten Kanals 23 in Verbindung steht, und einen Auslasskanal 39b, der im Bereich des Auslasses 22 in den Abführkanal 23 mündet. Das Ventilglied besteht z.B. aus einer Kugel 40, die in Schließrichtung mittels einer Feder 29 belastet ist.

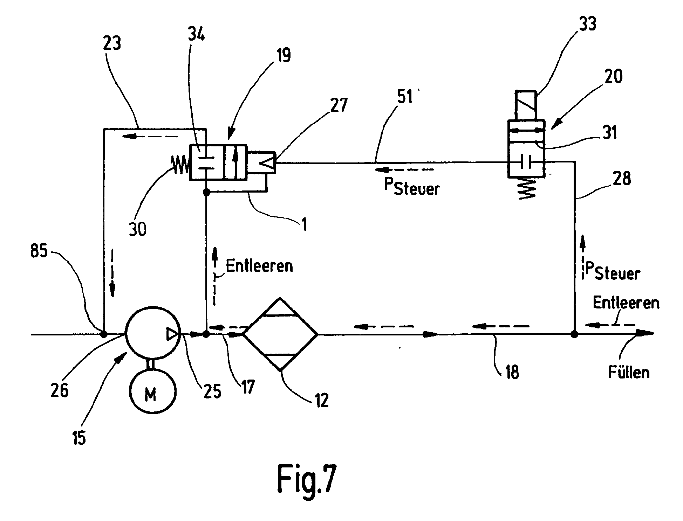

Das in Fig. 6 gezeigte zweite Ausführungbeispiel unterscheidet sich vom ersten Ausführungsbeispiel hinsichtlich des ersten steuerbaren Wegeventils 19 dadurch, dass beim zweiten Ausführungsbeispiel dieses integrierte Überdruckventil 39 entfällt.

Das zweite steuerbare Wegeventil 20 ist elektrisch, insbesondere elektromagnetisch, steuerbar. Sein Ventilglied 31 verschließt die Öffnung 32 eines im Gehäuse 13 enthaltenen Steuerkanals 28, der mit dem Luftauslass 18 in Verbindung steht. Beim Entleeren gibt das Ventilglied 31 die Öffnung 32 des Steuerkanals 28 frei und öffnet den Steuerkanal 28 zu einem darüber befindlichen Steuerraum 49. Der Steuerraum 49 ist über einen Steuerkanal 51 im Gehäuse 13 mit einem Steuereingang 27 des ersten steuerbaren Wegeventils 19 zu dessen pneumatischer Ansteuerung verbunden.

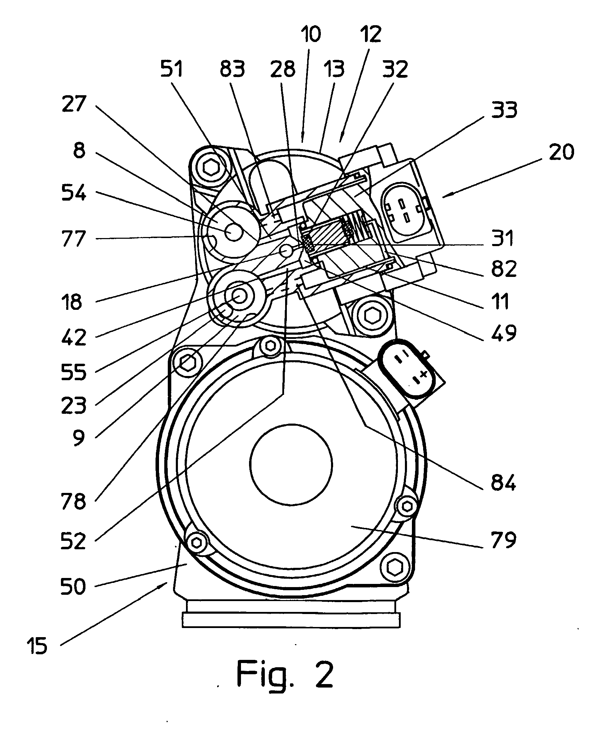

Das dritte steuerbare Wegeventil 41 dient beim Entleeren zum Einlass der Luft in das Gehäuseinnere 14 und in das Innere des Trockenbehälters 60 im Bereich des Bodens 61. Es weist einen pneumatischen Steuereingang 42 auf, der über einen Steuerkanal 52 im Gehäuse 13 ebenfalls mit dem Steuerraum 49 des zweiten Wegeventils 20 in Verbindung steht. Die beiden Steuerkanäle 51, 52 sind in Fig. 1 lediglich gestrichelt angedeutet und besser aus Fig. 2 entnehmbar.

Das dritte Wegeventil 41 weist einen ersten Anschluss in Form einer Gehäuseöffnung 43 auf, die mit einem Zuführkanal 44 in Verbindung steht, der im Gehäuse 13 ausgebildet ist und mit dem Luftauslass 18 in Verbindung steht und beim Entleeren vom Luftauslass 18 mit der Abluft gespeist wird. Das dritte Wegeventil 41 weist ferner einen zweiten Anschluss in Form einer zum Gehäuseinneren 14 hin vorzugsweise axial öffnenden Kammer 45 auf, von der beim Entleeren Luft in das Innere 63 des eingesetzten Trockenbehälters 60 einleitbar ist.

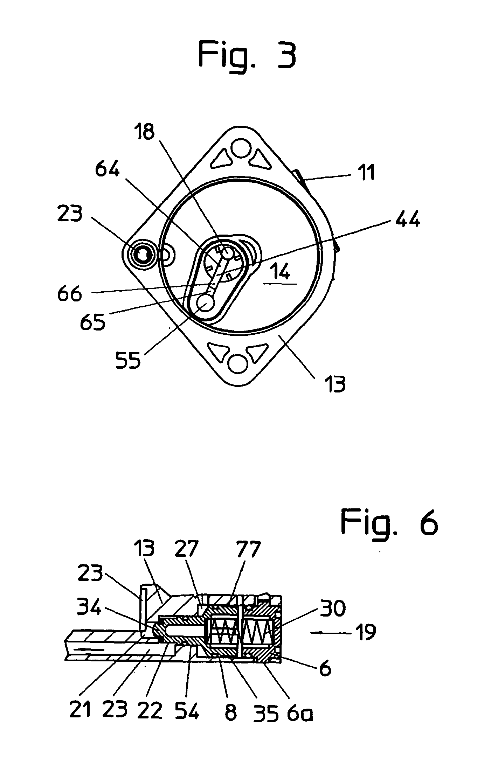

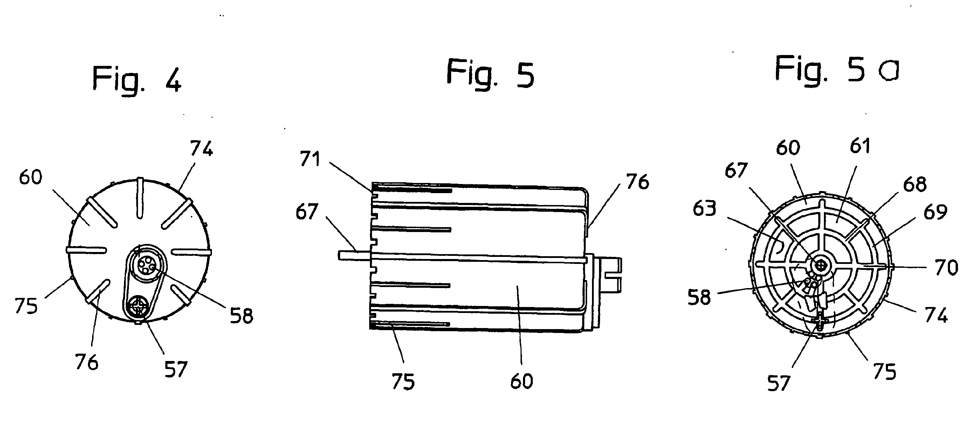

Der im Ende 36 des Gehäuses 13 ausgebildete Zuführkanal 44 ist aus Fig. 1 und insbesondere Fig. 3 erkennbar. Er weist einen vom Luftauslasskanal 18 quer, insbesondere etwa radial, abzweigenden ersten Kanalabschnitt 64, einen sich in Verlängerung des ersten Kanalabschnitts 64 erstreckenden zweiten Kanalabschnitt 65 und einen den ersten Kanalabschnitt 64 und den zweiten Kanalabschnitt 65 miteinander verbindenden dritten Kanalabschnitt 66 dazwischen auf. Der zweite Kanalabschnitt 65 erstreckt sich bis in die Kammer 45 des dritten Wegeventils 41. Er ist in Bezug auf den ersten Kanalabschnitt 64 axial versetzt vorgelagert. Der dritte Kanalabschnitt 66 verläuft zwischen beiden Kanalabschnitten 64, 65 und dabei in Längsrichtung und etwa parallel zum Luftauslass 18. Alle Kanalabschnitte 64 bis 66 sind als Nuten gestaltet, wobei der erste Kanalabschnitt 64 und der zweite Kanalabschnitt 65 in Axialrichtung betrachtet zum Boden 61 des Trockenbehälters 60 hin offen sind. Der Boden 61 des Trockenbehälters 60 weist entsprechend Fig. 4 außen überstehende, allgemein mit 62 bezeichnete Wandteile auf, die bei eingesetztem Trockenbehälter 60 den zweiten Kanalabschnitt 65 und dritten Kanalabschnitt 66, insbesondere die diese bildenden Nuten, abdecken.

Dieser zuvor beschriebene Zuführkanal 44, der eine Verbindung zwischen dem Luftauslass 18 einerseits und dem Einlass 43 des dritten Wegeventils 41 andererseits herstellt, ist am Ende 36 des Gehäuses 13 in dieses bei dessen Herstellung integriert. Der Durchlassquerschnitt dieses Zuführkanals 44 ist dem jeweils vorgegebenen Sollluftdurchsatz beim Entleeren angepasst und in Anpassung daran verschieden groß bemessen. Der Durchlassquerschnitt des Zuführkanals 44 wird also entsprechend den Anforderungen an den Sollluftdurchsatz beim Entleeren entsprechend gewählt, was fertigungstechnisch z.B. beim Herstellen des Gehäuses 13 durch Spritzen od.dergl. Formen ohne besonderen Zusatzaufwand möglich ist. Der Durchlassquerschnitt des Zuführkanals 44 ist maßgebend dafür, wie schnell beim Entleeren ein oder mehrere angeschlossene Anschlusselemente selbst mit großem Fassungsvolumen entleert werden können. Der Durchlassquerschnitt des Zuführkanals 44 ist z.B. so gewählt, dass beispielsweise ein Anschlusselement in Form eines Behälters, der 7 Liter fasst, in einer Zeit von bis nur 7 Sekunden vollständig entleert werden kann. Dies ist wesentlich für z.B. Luftfedern von Fahrzeugen als Anschlusselemente, und dabei solchen z.B. von Geländefahrzeugen, die beim Anheben bzw. Absenken einen größeren Hub machen, wodurch beim Absenken eine entsprechend große Luftmenge pro Zeiteinheit mit Hilfe der Druckluftregeleinrichtung 10 entleert werden muss.

Bei einem vorteilhaften Ausführungsbeispiel beträgt der Durchlassquerschnitt des Zuführkanals 44 etwa zwischen 2 und 15 mm², z.B. zwischen 6 und 8 mm².

Der Boden 61 des Trockenbehälters 60 enthält ausmittig einen ersten Durchlass 57, der mit der axial öffnenden Kammer 45 beim Öffnen des dritten Wegeventils 41 in Verbindung gelangt, so dass beim Entleeren über den Luftauslass 18 eintretende Luft, die den Zuführkanal 44 passiert, über die geöffnete Kammer 45 und den ersten Durchlass 57 in den Trockenbehälter 60 hineingelangen kann. Der Boden 61 des Trockenbehälters 60 ist ferner mit einem zweiten Durchlass 58 versehen, der in Abstand vom ersten Durchlass 57 vorgesehen ist und in den Luftauslass 18 und den Zuführkanal 44 mündet, wobei der zweite Durchlass 58 etwa auf Höhe des Luftauslasses 18 verläuft. Der zweite Durchlass 58 dient beim Füllen für den Auslass der Luft aus dem Trockenbehälter 60 und den Einlass in den Luftauslass 18. Dieser zweite Durchlass 58 des Trockenbehälters 60 enthält das zum Luftauslass 18 hin öffnende Ventil 16, das den Durchlass 58 steuert. Das Ventil 16 weist ein zum Luftauslass 18 etwa koaxiales Ventilglied 53 auf, das mittels einer Feder 56 in Schließrichtung belastet ist. Das Ventilglied 53 verschließt den zweiten Durchlass 58 unter der Wirkung des Entleerdruckes und/oder der Feder 56. Beim Füllen kann das Ventilglied 53 gegen die Wirkung der Feder 56 unter der Wirkung des Fülldruckes, wenn dieser entsprechend groß ist, selbsttätig öffnen und den zweiten Durchlass 58 zum Luftauslass 18 hin frei geben.

Der Trockenbehälter 60 weist auf der Innenseite des Bodens 61 in Umfangsrichtung verlaufende Strömungsleitkanäle 68 auf, die z.B. entlang etwa konzentrischen Kreisen verlaufen und mit Vorteil z.B. durch zum Behälterraum 63 offene Nuten 69 gebildet sind. Diese Strömungsleitkanäle 68, insbesondere Nuten 69, stehen über einzelne radial verlaufende Leitkanäle, z.B. Nuten 70, miteinander in Verbindung. Der Trockenbehälter 60 weist an dem dem Boden 61 gegenüberliegenden anderen Ende 71 Auslässe 72 auf, die als Öffnungen in der dortigen Abschlusswand gebildet sind und die beim Füllen den Eintritt von Druckluft ermöglichen und beim gegensinnigen Entleeren den Auslass gegensinnig hindurchgeführter Luft ermöglichen. Der Trockenbehälter 60 ist im Gehäuse 13 unter Bildung eines Ringspaltes 73 zwischen seiner Topfwand 74 und dem Gehäuse 13 gehalten, wobei dieser Ringspalt 73 zur Rückführung der beim Entleeren am linken Endbereich aus dem Trockenbehälter 60 austretenden Luft zum in Fig. 1 gegenüberliegenden rechten Ende 36 des Gehäuses 13 dient, wobei die auf diese Weise im Ringspalt 73 zurückgeführte Luft dem vom Gehäuse 13 einerseits und dem Boden 61 des Trockenbehälters 60 andererseits begrenzten Kanal 23 zugeführt wird, der vom ersten steuerbaren Wegeventil 19 gesteuert wird.

Zwischen dem Trockenbehälter 60 und dem Gehäuseinneren 14 sind endseitig und/oder umfangsseitig des Trockenbehälters 60 Abstandshalter 75 vorgesehen, z.B. am Trockenbehälter 60 und/oder Gehäuse 13 angeformte Vorsprünge 76, z.B. Stege, Rippen od.dergl. Beim gezeigten Ausführungsbeispiel sind solche Abstandshalter 75 umfangsseitig und im Bereich der Außenseite des Bodens 61 des Trockenbehälters 60 vorgesehen zur Schaffung des Ringspaltes 73. In Fig. 3 ist angedeutet, dass auch das Gehäuse 13 auf der Innenseite des rechten Endes 36 mit entsprechenden Abstandshaltern 75 versehen sein kann.

Das erste steuerbare Wegeventil 19 und/oder das dritte steuerbare Wegeventil 41 ist gegen die Wirkung einer Rückstellkraft, insbesondere einer mittels einer Feder 30 bzw. 46 erzeugten Federkraft, in seiner Schließstellung gehalten. Diese Federkraft ist zum Entleeren von dem Steuerdruck überwindbar, mit dem der jeweilige Steuereingang 27 bzw. 42 beaufschlagt wird.

Das erste Wegeventil 19 und/oder das zweite Wegeventil 20 und/oder das dritte Wegeventil 41 und/oder das Ventil 16 des Trockenbehälters 60 weist als betätigtes Ventilglied 34 bzw. 31 bzw. 47 bzw. 53 einen Stift, Kolben, Ventilteller od.dergl. auf, wobei dieses Ventilglied 34 bzw. 47 im Gehäuse 13 geführt ist und das Ventilglied 53 des Ventils 16 in einem Ansatz auf der Außenseite des Bodens 61 des Trockenbehälters 60 geführt ist.

Dem Ventilglied 34, 47 des ersten Wegeventils 19 und/oder des dritten Wegeventils 41 ist ein Steuerglied 35 bzw. 48 zur Betätigung durch pneumatische Beaufschlagung zugeordnet. Dieses Steuerglied 35 bzw. 48 ist im Gehäuse 13 geführt und koaxial zum zugeordneten Ventilglied 34 bzw. 47 angeordnet und damit verbunden, wobei beim gezeigten Ausführungsbeispiel das jeweilige Steuerglied 35, 48 und Ventilglied 34, 47 jeweils miteinander einstückig sind. Das Steuerglied 35 bzw. 48 besteht aus einem Kolben, Stift, Teller od.dergl. Die wirksame Fläche des Steuergliedes 35, 48 des Wegeventils 19 bzw. des Wegeventils 41 ist größer als die wirksame Fläche des jeweils zugeordneten Ventilgliedes 34 bzw. 47.

Das erste Wegeventil 19 und das dritte Wegeventil 41 sind zueinander etwa parallel und mit Querversatz angeordnet und befinden sich im rechten Ende 36 ebenso wie auch das zweite Wegeventil 20.

Das Gehäuse 13 weist zylindrische Gehäuseaufnahmen 8 für das erste Wegeventil 19 und 9 für das dritte Wegeventil 41 auf, wobei diese Gehäuseaufnahmen 8, 9 jeweils als Stufenbohrungen gebildet sind, die zum in Fig. 1 rechten Ende des Gehäuses 13 hin offen sind, so dass von dort in einer Richtung die Montage der Wegeventile 19 und 41 in einfacher Weise möglich ist. Von diesen Stufenbohrungen 8, 9 nimmt die im Durchmesser kleinere Bohrung 54 bzw. 55 das jeweilige Ventilglied 34 bzw. 47 auf. Die andere im Durchmesser größere Bohrung 77, 78 nimmt das jeweilige Steuerglied 35 bzw. 48 des Wegeventils 19 bzw. 41 auf. In diesen Stufenbohrungen 8, 9 sind die Ventilglieder 34, 47 und Steuerglieder 35, 48 der Wegeventile 19, 41 zugleich zentriert und verschiebbar geführt. Die Gehäuseaufnahmen 8, 9 sind am Ende des Gehäuses 13 mittels Kappen 6, 7 verschlossen, die zugleich zur Abstützung der jeweiligen Federn 30, 46 dienen. Die Kappen 6, 7 sind in einfacher Weise z.B. mittels Bajonettverschlusses 6a, 7a lösbar im Gehäuse 13 gehalten.

Das Gehäuse 13 weist an dem die Wegeventile 19, 20, 41 enthaltenden rechten Ende 36 einen mit dem Luftauslass 18 in Verbindung stehenden Leitungsanschluss 37 auf für den Anschluss einer zum Anschlusselement führenden, nicht weiter gezeigten Leitung. Der Leitungsanschluss 37 besteht z.B. aus einer Gewindebohrung.

Wie insbesondere aus Fig. 1 ersichtlich ist, verläuft der Abführkanal 23 durch das Gehäuse 13 hindurch in Fig. 1 nach links bis hin zum Gehäuse 50 des Kompressors 15. Im Verlauf des Abführkanals 23, vorzugsweise im Bereich der Ausgangsöffnung 24, weist dieser ein Überdruckventil 2 auf. das Überdruckventil 2 enthält einen permanenten Durchlass 3, z.B. eine relativ kleine Bohrung, und ist ferner derart ausgebildet, dass das Überdruckventil 2 bei einem definierten Druck im Abführkanal 23, z.B. von 8 bar, öffnet. Das Überdruckventil 2 hat den Vorteil, dass es beim Durchgang großer Luftmengen selbsttätig öffnet und dabei sonst etwa entstehende Stöße, Schläge und Geräusche auf diese Weise verhindert werden. Fallen beim Entleeren nur relativ kleine Luftmengen pro Zeiteinheit an, so spricht das Überdruckventil 2 nicht an, da die Entlüftung durch deren permanenten Durchlass 3 erfolgen kann.

Mit Vorteil ist das Gehäuse 13 und/oder der Trockenbehälter 60 aus einem Formteil aus Kunststoff oder aus Leichtmetallguss gebildet. Auf diese Weise lassen sich sowohl das Gehäuse 13 als auch der Trockenbehälter 60 kostengünstig mit Ausbildung sämtlicher beschriebener Details herstellen. Da alle drei Wegeventil 19, 20 und 41 auf einer Seite, nämlich der rechten Endseite, des Gehäuses 13 angeordnet sind, ist deren Montage besonders einfach und schnell durchführbar, zumal das erste Wegeventil 19 und das dritte Wegeventil 41 achsparallel und vom offenen Ende des Gehäuses 13 her montiert werden können. An diesem Ende 36 befindet sich als alleiniger Anschluss lediglich der Leitungsanschluss 37, insbesondere die Gewindebohrung, für den Anschluss einer Leitung, die zu mindestens einem Anschlusselement führt, z.B. einem Druckspeicher und/oder ein oder mehreren Luftfedern. Auch das zweite Wegeventil 20 ist an diesem Endbereich des Gehäuses 13 schnell und einfach montierbar, und zwar von oben her durch Einsetzen in die dafür vorgesehene Gehäuseaufnahme 11. Der elektrische Anschluss ist als Steckanschluss ausgebildet, so dass der elektrische Anschluss schnell und einfach erfolgen kann.

Das zweite Wegeventil 20 ist mit einer Entlüftung versehen, damit dieses im Schließzustand drucklos ist. Diese Entlüftung erfolgt über einen Kanal 82, der mit nur gestrichelt angedeuteten Entlüftungskanälen 83, 84 der Wegeventile 19 bzw. 41 auch zu deren Entlüftung in Verbindung steht. Das Druckluftaggregat ist insgesamt kompakt und hinsichtlich des Lufttrockners 12 mit Druckluftregeleinrichtung 10 klein, übersichtlich und einfach, wobei keine besonderen zusätzlichen äußeren Leitungsführungen etwa für die Abluft erforderlich sind.

Bei Einschaltung des Kompressors 15 zum Füllen mindestens eines an den Luftauslass 18 angeschlossenen Anschlusselements, z.B. eines Druckspeichers und/oder einer Luftfeder od.dergl., wird vom Kompressor 15 erzeugte Druckluft von dessen Druckraum 25 zum Lufteinlass 17 geleitet, wobei die Druckluft im wesentlichen durch das Innere 63 des Trockenbehälters 60 hindurchgeführt wird. Das Ventil 16 im Boden 61 des Trockenbehälters 60 öffnet selbsttätig bei Überschreiten der Schließkraft, wodurch das Ventil 16 den zweiten Durchlass 58 des Trockenbehälters 60 zum Luftauslass 18 hin frei gibt. Die Luft gelangt somit zum Luftauslass 18 und zum angeschlossenen mindestens einen Anschlusselement. Die Wegeventile 19, 20 und 41 sind dabei geschlossen. Der auf deren jeweilige Ventilglieder 34 bzw. 31 bzw. 47 wirkende Druck kann keine Ventilöffnung hervorrufen, da die Feder 30 bzw. die Feder des Wegeventils 20 bzw. die Feder 46 hinsichtlich ihrer Federkraft so gewählt sind, dass die Ventilglieder 34, 31 und 47 unter dieser Federwirkung in Schließstellung gehalten sind. Sollte der Systemdruck ein vorgegebenes Maß, das durch das Überdruckventil 39 vorgegeben ist, überschreiten, so öffnet das Überdruckventil 39 gegen die Wirkung der Feder 29, wobei jedoch nach wie vor die Ventilglieder 34, 31 und 47 der Wegeventile 19, 20 bzw. 41 in Schließstellung verbleiben.

Soll das mindestens eine Anschlusselement, z.B. mindestens eine Luftfeder, entlüftet und somit geleert werden, so wird das elektromagnetische Wegeventil 20 eingeschaltet. Das Ventilglied 31 gibt dann die Öffnung 32 des Steuerkanals 28, der mit dem Luftauslass 18 in Verbindung steht, frei, so dass der Steuerkanal 28 mit dem Steuerraum 49 verbunden ist, über den das Wegeventil 19 und das Wegeventil 41 über die zugeordneten Steuerkanäle 51 bzw. 52 pneumatisch angesteuert werden. Der Steuereinlass 27 des Steuergliedes 35 sowie der Steuereingang 42 des Steuergliedes 48 werden mit dem Druck gespeist, wodurch über die Verschiebung dieser Steuerglieder 35 bzw. 48 die Ventilglieder 34 bzw. 47 aus der dargestellten Schließstellung in Fig. 1 nach rechts in die Öffnungsstellung verschoben werden. Beim Öffnen des Wegeventils 41 wird der mit dem Luftauslass 18 in Verbindung stehende Zuführkanal 44 über die Gehäuseöffnung 43 mit der Kammer 45 verbunden, so dass beim Entleeren die Druckluft über den Luftauslass 18, den Zuführkanal 44, die Gehäuseöffnung 43, die Kammer 45 und den ersten Durchlass 57 in das Innere 63 des Trockenbehälters 60 gelangen kann. Dort wird die Luft durch die Strömungsleitkanäle 68 auf der Innenseite des Bodens 61 in Umfangsrichtung geleitet, so dass die Luft möglichst über die ganze Querschnittsfläche des Innenraumes 63 durch den Trockenbehälter 60 unter Beaufschlagung des enthaltenen Granulats in Fig. 1 nach links bis hin zum Ende 71 geleitet wird und dort aus den Auslässen 72 in der Abschlussplatte austritt. Dort wird die Luft umgelenkt und gelangt über den Ringspalt 73 zwischen dem Gehäuse 13 und den Trockenbehälter 60 in Fig. 1 nach rechts bis hin dortigen Kanal 23, der über das geöffnete Wegeventil 19 durchgängig ist, so dass die Luft durch den Abführkanal 23 und dessen Ausgangsöffnung 24 und über den im Gehäuse 50 enthaltenen Kanal 85 in den Saugraum 26 des Kompressors 15 geführt wird. Diese Entlüftung in den Saugraum 26 hat den Vorteil, dass sonst damit verbundene Geräusche, z.B. Zischen, vermieden sind. Auch etwaige in der Abluft enthaltene Verunreinigungen werden auf diese Weise von der Umgebung ferngehalten. Die Druckluftregeleinrichtung 10 macht es möglich, vor allem beim Entleeren große Luftdurchsatzmengen zu beherrschen, wobei das elektromagnetische Wegeventil 20 klein, kompakt und leicht mit nur geringer Leistungsaufnahme gestaltet werden kann und dadurch ein geringes Gewicht und ein geringer Bauraum verwirklicht werden können. Es ist ersichtlich, dass die Druckluftregeleinrichtung 10 keine besondere Drossel benötigt. Der hinsichtlich seines Durchlassquerschnitts an verschiedene Aufgaben anpassbare Zuführkanal 44 macht es möglich, entsprechend den gestellten Anforderungen große Luftmengen in äußerst kurzer Zeit hindurchzulassen und zu entlüften.

Wie sich insbesondere aus Fig. 1 ergibt, ist das Gehäuse 13 des Lufttrockners 12 mit der in Fig. 1 linken Stirnseite 38 direkt und derart an das Gehäuse 50 des Kompressors 15 angesetzt, dass der Lufteinlass 17 mit dem Druckausgang 25 und der Abführkanal 23 mit seiner Ausgangsöffnung 24 zum Entleeren mit dem Saugraum 26 in direkter Verbindung stehen. Besonderer Leitungsverbindungen, die ihrerseits besondere Anschlüsse benötigen, bedarf es deswegen nicht. Damit ist zugleich der Gefahr etwaiger Undichtigkeiten von Leitungen und/oder deren Anschlüssen vorgebeugt.

Ersichtlich ist aus Fig. 1 ferner, dass der Kompressor 15 mit dem elektrischen Hochleistungsmotor 79 zu einer Funktionseinheit zusammengebaut ist. Der Motor 79 erstreckt sich dabei unterhalb des Lufttrockners 12 und in zumindest geringem Abstand von diesem, wobei er zum Lufttrockner 12 etwa parallel verläuft.

In besonderer Gestaltung ist der Kompressor 15 als zweistufiger Hochdruckkompressor ausgebildet. Er weist im Gehäuse 50 einen etwa quer zur Längsmittelachse der Motorwelle 80 gerichteten, länglichen Kolbenträger 86 auf, der an einem Ende einen ersten Kolben 87 mit großem Durchmesser für die erste Druckstufe und am gegenüberliegenden Ende einen zweiten Kolben 88 mit kleinerem Durchmesser für die zweite Druckstufe aufweist. Der Kolbenträger 86 bildet mit zumindest einem der beiden Kolben 87, 88 ein einstückiges Bauteil, das vorzugsweise als Formteil aus Kunststoff oder aus Aluminiumdruckguss ausgebildet ist.

Das Gehäuse 50 weist in Fig. 1 unten einen ersten Zylinderraum 89 und oben einen zweiten Zylinderraum 90 auf, die einander gegenüberliegen und in denen der jeweils zugeordnete Kolben 87 bzw. 88 hin und her gehend geführt sind. Auf der Druckseite des ersten Kolbens 87 ist zwischen diesem und dessen Zylinderraum 89 ein erster Druckraum 91 gebildet, in dem in der ersten Stufe Druckluft auf einen Druck etwa in der Größenordnung von 1 bis 10 bar, z.B. 5 bar, verdichtet wird. Die Druckluft wird in der Saugphase vom ersten Kolben 87 von außen her über eine Zuleitung 92 und Öffnung 93 im Gehäuse 50 in den Saugraum 26 gesaugt.

Auf der Druckseite des zweiten Kolbens 88 ist im zweiten Zylinderraum 90 ein zweiter Druckraum 25 gebildet, in dem die Verdichtung auf die zweite Druckstufe geschieht, z.B. auf einen Druck etwa in der Größenordnung von 8 bis 40 bar, z.B. 15 bis 18 bar. Der zweite Druckraum 25 ist über einen Verbindungskanal 94 mit dem ersten Druckraum 91 verbunden, über den das in dem ersten Druckraum 91 verdichtete Druckmedium aus dem ersten Druckraum 91 dem zweiten Druckraum 25 zugeführt wird, wo die Verdichtung des Druckmediums auf die zweite Druckstufe geschieht. Der Verbindungskanal 94 verläuft in vorteilhafter Weise im Inneren des Kolbenträgers 86. Er ist in Fig. 1 nur gestrichelt angedeutet und besteht z.B. aus einem durchgängigen, bei der Herstellung des Kolbenträgers 86 gleich mit eingebrachten Kanal. Der in den zweiten Druckraum 25 mündende Ausgang des Verbindungskanals 94 ist mittels mindestens eines Ventils 95 verschlossen, das nur schematisch angedeutet ist und z.B. aus einem üblichen Flatterventil mit einer beweglichen Platte als Ventilglied besteht. Das Ventil 95 ist am zweiten Kolben 88 angebracht. Bei Verdichtung im zweiten Druckraum 25 wird das Ventil 95 unter dem Verdichtungsdruck geschlossen, während es in der Saugphase unter dem Druck im Verbindungskanal 94 geöffnet ist, so dass das in der ersten Stufe im ersten Druckraum 91 verdichtete Druckmedium über den Verbindungskanal 94 in den zweiten Druckraum 25 geleitet wird.

Auch der erste Druckraum 91 ist mittels mindestens eines Ventils 96 verschlossen, das nur schematisch praktisch als Strich angedeutet ist und hier am ersten Kolben 87 angebracht ist, statt dessen aber auch am Gehäuse 50 zwischen einem Einlass des ersten Druckraums 91 und diesem wirkend angeordnet sein kann. Beim gezeigten Ausführungsbeispiel sind am ersten Kolben 87 z.B. zwei derartige Ventile 96 vorgesehen. Auch diese sind als Flatterventile mit einer beweglichen Platte als Ventilglied ausgebildet und verschließen einen jeweiligen Durchgang 87a im ersten Kolben 87, der zum Saugraum 26 mündet. Bei der Verdichtung im ersten Druckraum 91 wird das jeweilige Ventil 96 unter dem Verdichtungsdruck geschlossen, hingegen in der Saugphase geöffnet, so dass es in der Saugphase den Saugraum 26 mit dem ersten Druckraum 91 verbindet. Der Saugraum 26 ist durch den Innenraum des Gehäuses 50 gebildet, der auf derjenigen Seite der Kolben 87, 88 vorgesehen ist, die dem jeweiligen ersten Druckraum 91 bzw. zweiten Druckraum 25 abgewandt ist.

Jeder Kolben 87, 88 weist einen vorzugsweise aus Kunststoff gebildeten Kolbenring 97 und Führungsring 98 auf.

Der Kolbenträger 86 ist mittels eines Pleuels 99 angetrieben, das auf einem Exzenterabschnitt 81 am Ende der Motorwelle 80 drehbar gelagert ist und quer dazu in Abstand davon am Kolbenträger 86 drehbar gelagert ist, z.B. an einem Querstift 100, der fester Bestandteil des Kolbenträgers 86 ist und von diesem etwa parallel zur Motorwelle 80 und in Richtung zu dieser soweit absteht, dass das Pleuel 99 mittels z.B. eines Nadellagers darauf drehbar gelagert werden kann.

Der zweite Druckraum 25, mit dem der Lufteinlass 17 des Lufttrockners 12 verbindbar ist, ist mittels eines Überdruckventils 110 gesteuert, das z.B. bei einem Druck in dem zweiten Druckraum 25, der größer ist als der Druck im Lufteinlass 17, öffnet. Auf der Motorwelle 80 ist eine Ausgleichsmasse 111 zum Gewichtsausgleich befestigt.

Der beschriebene zweistufige Hochdruckkompressor 15 ist außerordentlich einfach, kompakt, kostengünstig und ermöglicht eine große Leistung. Beim Antrieb des Kolbenträgers 86 bei umlaufender Motorwelle 80 wird der Kolbenträger 86 hin und her gehend bewegt. Dabei ergibt sich bei doppelter Verdichtung ein nur geringer Hub, wie er sonst bei einem einstufigen Kompressor vorliegt. Erfolgt mittels des ersten Kolbens 87 im ersten Druckraum 91 die Verdichtungsphase, so ist das mindestens eine Ventil 96 geschlossen, über das zuvor bei Öffnung des Ventils Luft in den ersten Druckraum 91 eingesaugt wurde. In der Druckphase wird im ersten Druckraum 91 die angesaugte Luft auf die erste Stufe z.B. von etwa 1 bis 10 bar, z.B. 5 bar, verdichtet und sodann über den Verbindungskanal 94 bei geöffnetem Ventil 95 in den zweiten Druckraum 25 eingeleitet, in dem in der Druckphase mittels des kleineren zweiten Kolbens 88 eine weitere Verdichtung in der zweiten Stufe bei geschlossenem Ventil 95 auf 8 bis 40 bar, z.B. auf etwa 15 bis 18 bar, erfolgt. Aufgrund der Gestaltung des Kolbenträgers 86 mit beiden endseitigen Kolben 87, 88 ergibt sich praktisch ein Gewichtsausgleich und auch ein Schwingungsausgleich. Der Kompressor 15 arbeitet daher praktisch vibrationsfrei, zumindest im Vergleich zu bekannten Verdichtern sehr geräuscharm. Der Leistungsbedarf des Kompressors ist relativ gering, zumal die beiden Kolben 87, 88 praktisch selbstschmierend geführt sind. In vorteilhafter Weise ergeben sich ferner günstige Temperaturverhältnisse, was dazu führt, dass in der zweiten Druckstufe am Ausgang des zweiten Druckraumes 25 eine relativ niedrige Temperatur z. B in der Größenordnung von etwa 60° C vorliegt. Die in der ersten Stufe im ersten Druckraum 91 verdichtete Luft wird durch den Verbindungskanal 94 des Kolbenträgers 86 geleitet, wo durch Wärmeleitung und Wärmeabgabe an das Innere des Saugraumes 26 und von dort über das Gehäuse 50 nach außen eine Abkühlung geschieht.

In Fig. 7 ist schematisch ein Schaltplan des Lufttrockners 12 in einer abgewandelten vereinfachten Ausführungsform dargestellt. Wie daraus ersichtlich ist, ist das in Fig. 1 zwischen dem Lufttrockner 12 und dem Anschlusselement vorhandene Ventil 1,6 entfallen. Es ist auch kein sonstiges, an anderer Stelle angeordnetes Rückschlagventil vorhanden. Vielmehr ist der Lufttrockner 12 sowohl beim Füllen (Pfeil mit durchgezogener Linie) als auch beim Entleeren (Pfeil mit gestrichelter Linie) unmittelbar mit dem in Fig. 7 nicht weiter gezeigten Anschlusselement, z.B. einem Druckspeicher und/oder einer Luftfeder, verbunden. Das erste Wegeventil 19, das pneumatisch steuerbar ist, ist beim Entleeren unmittelbar an den Lufteinlass 17 des Lufttrockners 12 angeschlossen und ermöglicht eine Druck-Schnellabsenkung und/oder eine gesteuerte Druckabsenkung. Der pneumatische Steuereingang 27 des ersten Wegeventils 19 ist an den pneumatischen Steuerausgang des zweiten Wegeventils 20, das magnetisch ansteuerbar ist, unmittelbar angeschlossen. Der Steuereingang dieses zweiten Wegeventils 20 zweigt unmittelbar von der Füllleitung ab, die mit dem Luftauslass 18 des Lufttrockners 12 in Verbindung steht. Der pneumatische Steuereingang 27 des ersten Wegeventils 19 ist beim Entleeren über eine Druckmittelleitung 1 unmittelbar mit dem Lufttrockner 12 verbunden und mit dem Druck in dem Anschlusselement, z.B. einer Luftfeder, beaufschlagt. Dabei ist der pneumatische Steuereingang 27 beim Entleeren gegen die Wirkung einer auf diesen Steuereingang 27 wirkenden Rückstellkraft, z.B. einer Feder 30, beaufschlagbar. In dieser Gestaltung ist die Druckluftregeleinrichtung besonders einfach und auf ein Minimum an einzelnen Elementen reduziert.

## Patentansprüche

1. Druckluftregeleinrichtung (10), mit einem Lufttrockner (12), in dessen Gehäuse (13) ein topfförmiger Trockenbehälter (60) enthalten ist, dessen Inneres (63) über das Gehäuse (13) einerseits mit einer Druckmittelquelle (15) und andererseits mit einem Anschlusselement in Form eines Druckspeichers und/oder einer Luftfeder, über ein zu diesem öffnendes Ventil (16) verbindbar ist, wobei das Gehäuse (13) mindestens einen Lufteinlass (17) sowie mindestens einen Luftauslass (18) jeweils für die Druckluft aufweist, die zum Füllen des mindestens einen Anschlusselements in einer Strömungsrichtung vom Lufteinlass (17) durch den Trockenbehälter (60) hindurch zum Luftauslass (18) geführt wird und zum Entleeren in entgegengesetzter Strömungsrichtung vom Luftauslass (18) her durch den Trockenbehälter (60) und das Gehäuse (13) und aus letzterem abgeführt wird, mit mindestens zwei steuerbaren Wegeventilen zum Entleeren, die in das Gehäuse (13) des Lufttrockners (12) integriert und eingebaut sind und von denen zumindest ein steuerbares Wegeventil (19) mit seinem Ventilglied (34) einen im Gehäuse (13) längs dieses verlaufenden Abführkanal (23) steuert,
**dadurch gekennzeichnet,**
**dass** das den Abführkanal (23) steuernde erste Wegeventil (19) von mindestens einem weiteren steuerbaren Wegeventil (20) mit dem Druck beim Entleeren angesteuert wird, dass das erste Wegeventil (19) den Durchgang zwischen einem Einlass in Form einer zum Gehäuseinneren (14) hin offenen ersten Gehäuseöffnung (21) eines Kanals (23) und einem Auslass dieses in Form einer zweiten Gehäuseöffnung (22) steuert, an die sich der Abführkanal (23) anschließt, der mit mindestens einer Ausgangsöffnung (24) in das Gehäuse (50) der daran anschließbaren Druckmittelquelle (15) mündet und beim Entleeren der Entlüftung dorthin dient, und dass ein drittes steuerbares Wegeventil (41) in das Gehäuse (13) des Lufttrockners (12) integriert und eingebaut ist, das beim Entleeren zum Einlass der Luft in das Gehäuseinnere (14) und den Trockenbehälter (60) dient.

2. Druckluftregeleinrichtung nach Anspruch 1,
**dadurch gekennzeichnet,**
**dass** in das Ventilglied (34) des ersten steuerbaren Wegeventils (19) ein Überdruckventil (39) integriert ist, dessen Einlasskanal (39a) mit dem Einlass (21) des vom Ventilglied (34) gesteuerten Kanals (23) in Verbindung steht und dessen Auslasskanal (39b) in den Abführkanal (23) mündet.

3. Druckluftregeleinrichtung nach Anspruch 2,
**dadurch gekennzeichnet,**
**dass** das Überdruckventil (39) des ersten steuerbaren Wegeventils (19) für einen Öffnungsdruck gleich oder größer als der Betriebsdruck, vorzugsweise 18 bis 20 bar, ausgebildet ist.

4. Druckluftregeleinrichtung nach einem der Ansprüche 1 bis 3,
**dadurch gekennzeichnet,**
**dass** das mindestens eine weitere steuerbare Wegeventil (20) elektrisch steuerbar ist und dessen Ventilglied (31) die Öffnung (32) eines Steuerkanals (28) im Gehäuse (13), der mit dem Luftauslass (18) in Verbindung steht, verschließt oder beim Entleeren freigibt und zu einem Steuerraum (49) öffnet, der über einen Steuerkanal (51) im Gehäuse (13) mit einem Steuereingang (27) des ersten steuerbaren Wegeventils (19) zu dessen pneumatischer Ansteuerung in Verbindung steht.

5. Druckluftregeleinrichtung nach einem der Ansprüche 1 bis 4,
**dadurch gekennzeichnet,**
**dass** das dritte steuerbare Wegeventil (41) einen pneumatischen Steuereingang (42) aufweist, der über einen Steuerkanal (52) im Gehäuse (13) mit dem Steuerraum (49) des weiteren steuerbaren Wegeventils (20) in Verbindung steht.

6. Druckluftregeleinrichtung nach Anspruch 1,
**dadurch gekennzeichnet,**
**dass** das dritte steuerbare Wegeventil (41) einen ersten Anschluss in Form einer Gehäuseöffnung (43) aufweist, die mit einem Zuführkanal (44) in Verbindung steht, der im Gehäuse (13) des Lufttrockners (12) ausgebildet ist, mit dem Luftauslass (18) in Verbindung steht und beim Entleeren über diesen mit der Abluft gespeist wird.

7. Druckluftregeleinrichtung nach Anspruch 1 oder 6,
**dadurch gekennzeichnet,**
**dass** das dritte steuerbare Wegeventil (41) einen zweiten Anschluss in Form einer zum Gehäuseinneren (14) hin vorzugsweise axial öffnenden Kammer (45) aufweist, von der beim Entleeren Luft in das Innere des eingesetzten Trockenbehälters (60) einleitbar ist.

8. Druckluftregeleinrichtung nach Anspruch 6 oder 7,
**dadurch gekennzeichnet,**
**dass** der Zuführkanal (44) einen vom Luftauslasskanal (18) quer, vorzugsweise radial, abzweigenden ersten Kanalabschnitt (64), einen sich in Verlängerung des ersten Kanalabschnitts (64) bis in die Kammer (45) des dritten steuerbaren Wegeventils (41) erstreckenden, in Bezug auf den ersten Kanalabschnitt (64) axial versetzt vorgelagerten zweiten Kanalabschnitt (65) und einen längsverlaufenden, den ersten Kanalabschnitt (64) und den zweiten Kanalabschnitt (65) miteinander verbindenden dritten Kanalabschnitt (66) aufweist.

9. Druckluftregeleinrichtung nach Anspruch 8,
**dadurch gekennzeichnet,**
**dass** der erste Kanalabschnitt (64) und der zweite Kanalabschnitt (65) als in Axialrichtung zum Boden (61) des eingesetzten Trockenbehälters (60) hin offene Nuten ausgebildet sind.

10. Druckluftregeleinrichtung nach Anspruch 8 oder 9,
**dadurch gekennzeichnet,**
**dass** der zweite Kanalabschnitt (65) und der dritte Kanalabschnitt (66), insbesondere die diese bildenden Nuten, mittels Wandteilen (62) des Bodens (61) des Trockenbehälters (60) abgedeckt sind.

11. Druckluftregeleinrichtung nach einem der Ansprüche 6 bis 10,
**dadurch gekennzeichnet,**
**dass** der Durchlassquerschnitt des Zuführkanals (44), insbesondere des ersten, zweiten und dritten Kanalabschnitts (64, 65, 66), dem jeweils vorgegebenen Sollluftdurchsatz beim Entleeren angepasst und in Anpassung daran verschieden groß bemessen ist.

12. Druckluftregeleinrichtung nach einem der Ansprüche 6 bis 11,
**dadurch gekennzeichnet,**
**dass** der Durchlassquerschnitt des Zuführkanals (44), insbesondere des ersten, zweiten und dritten Kanalabschnitts (64, 65, 66), zwischen 2 und 15 mm² beträgt.

13. Druckluftregeleinrichtung nach einem der Ansprüche 7 bis 12,
**dadurch gekennzeichnet,**
**dass** der Boden (61) des Trockenbehälters (60) einen mit der axial öffnenden Kammer (45) in Verbindung stehenden ersten Durchlass (57) für den Einlass der Luft in den Trockenbehälter (60) beim Entleeren aufweist.

14. Druckluftregeleinrichtung nach einem der Ansprüche 6 bis 13,
**dadurch gekennzeichnet,**
**dass** der Boden (61) des Trockenbehälters (60) einen in den Luftauslass (18) und Zuführkanal (44) mündenden zweiten Durchlass (58) für den Auslass der Luft aus dem Trockenbehälter (60) und Einlass in den Luftauslass (18) beim Füllen aufweist.

15. Druckluftregeleinrichtung nach Anspruch 14,
**dadurch gekennzeichnet,**
**dass** der zweite Durchlasse (58) des Trockenbehälters (60) ein diesen steuerndes Ventil (16) enthält, das ein zum Luftauslass (18) etwa koaxiales, federbelastetes Ventilglied (53) aufweist, welches den zweiten Durchlass (58) unter der Wirkung des Entleerdruckes und/oder seiner Feder (56) verschließt und gegensinnig unter der Wirkung des Fülldruckes beim Füllen öffnet.

16. Druckluftregeleinrichtung nach einem der Ansprüche 1 bis 15,
**dadurch gekennzeichnet,**
**dass** der Trockenbehälter (60) auf der Innenseite des Bodens (61) in Umfangsrichtung verlaufende Strömungsleitkanäle (68) aufweist.

17. Druckluftregeleinrichtung nach Anspruch 16,
**dadurch gekennzeichnet,**
**dass** die Strömungsleitkanäle (68) entlang etwa konzentrischen Kreisen verlaufen.

18. Druckluftregeleinrichtung nach Anspruch 16 oder 17,
**dadurch gekennzeichnet,**
**dass** die Strömungsleitkanäle (68) durch zum Behälterraum (63) offene Nuten (69) gebildet sind.

19. Druckluftregeleinrichtung nach Anspruch 18,
**dadurch gekennzeichnet,**
**dass** die Nuten (69) mittels einzelner radial verlaufender Nuten (70) miteinander in Verbindung stehen.

20. Druckluftregeleinrichtung nach einem der Ansprüche 1 bis 19,
**dadurch gekennzeichnet,**
**dass** der Trockenbehälter (60) an dem dem Boden (61) gegenüberliegenden Ende (71) Auslässe (72) für die beim Entleeren hindurchgeführte Luft aufweist.

21. Druckluftregeleinrichtung nach einem der Ansprüche 1 bis 20,
**dadurch gekennzeichnet,**
**dass** der Trockenbehälter (60) unter Bildung eines Ringspaltes (73) zwischen seiner Topfwandung (74) und dem Gehäuse (13) des Lufttrockners (12) in letzterem gehalten ist, wobei der Ringspalt (73) zur Rückführung der beim Entleeren endseitig aus dem Trockenbehälter (60) austretenden Luft zum gegenüberliegenden Ende des Gehäuses (13) und in den zwischen dem Boden (61) des Trockenbehälters (60) und dem Gehäuse (13) begrenzten, vom ersten steuerbaren Wegeventil (19) gesteuerten Kanal (23) dient.

22. Druckluftregeleinrichtung nach Anspruch 1 bis 21,
**dadurch gekennzeichnet,**
**dass** zwischen dem Trockenbehälter (60) und dem Gehäuseinneren (14) endseitig und/oder umfangsseitig des Trockenbehälters (60) Abstandshalter (75) vorgesehen sind.

23. Druckluftregeleinrichtung nach einem der Ansprüche 1 bis 22,
**dadurch gekennzeichnet,**
**dass** das erste steuerbare Wegeventil (19) und/oder das dritte steuerbare Wegenventil (41) gegen die Wirkung einer Rückstellkraft, insbesondere Federkraft (Feder 30, 46) in Schließstellung gehalten ist, die zum Entleeren von dem den jeweiligen Steuereingang (27,42) beaufschlagenden Steuerdruck überwindbar ist.

24. Druckluftregeleinrichtung nach einem der Ansprüche 1 bis 23,
**dadurch gekennzeichnet,**
**dass** das erste Wegeventil (19) und/oder das zweite Wegeventil (20) und/oder das dritte Wegeventil (41) und/oder das Ventil (16) des Trockenbehälters (60) als betätigtes Ventilglied (34,31,47,53) einen im Gehäuse (13) bzw. am Trockenbehälter (60) geführten Stift oder Kolben, oder Ventilteller aufweist.

25. Druckluftregeleinrichtung nach einem der Ansprüche 1 bis 24,
**dadurch gekennzeichnet,**
**dass** dem Ventilglied (34,47) des ersten Wegenventils (19) und/oder des dritten Wegeventils (41) zur Betätigung durch pneumatische Beaufschlagung ein im Gehäuse (13) geführtes Steuerglied (35,48) zugeordnet ist, das koaxial zum zugeordneten Ventilglied (34,47) angeordnet und damit verbunden ist, vorzugsweise damit einstückig ist.

26. Druckluftregeleinrichtung nach Anspruch 25,
**dadurch gekennzeichnet,**
**dass** die wirksame Fläche des Steuergliedes (35,48) des ersten Wegeventils (19) und/oder des dritten Wegeventils (41) größer ist als die wirksame Fläche des jeweils zugeordneten Ventilgliedes (34,47).

27. Druckluftregeleinrichtung nach einem der Ansprüche 1 bis 26,
**dadurch gekennzeichnet,**
**dass** das erste Wegeventil (19) und das dritte Wegeventil (41) zusammen mit dem zweiten Wegeventil (20) am einen Ende des Gehäuses (13) des Lufttrockners (12) in jeweiligen Gehäuseaufnahmen (8, 9, 11) dafür angeordnet sind.

28. Druckluftregeleinrichtung nach Anspruch 27,
**dadurch gekennzeichnet,**
**dass** das erste Wegeventil (19) und das dritte Wegeventil (41) zueinander parallel und mit Querversatz angeordnet sind.

29. Druckluftregeleinrichtung nach Anspruch 27 oder 28,
**dadurch gekennzeichnet,**
**dass** die Gehäuseaufnahmen (8, 9) für das erste Wegeventil (19) und/oder das dritte Wegeventil (41) jeweils aus Stufenbohrungen gebildet sind, von denen die eine im Durchmesser kleinere Bohrung (54, 55) das jeweilige Ventilglied (34,47) und die andere im Durchmesser größere Bohrung (77, 78) das jeweilige Steuerglied (35,48) aufnimmt und zugleich führt.

30. Druckluftregeleinrichtung nach Anspruch 29,
**dadurch gekennzeichnet,**
**dass** die Gehäuseaufnahmen (8, 9) zumindest des ersten Wegeventils (19) und/oder des dritten Wegeventils (41) zum Ende des Gehäuses (13) hin offen sind und dort mittels die jeweiligen Federn (30,46) abstützender Kappen (6, 7) verschlossen sind.

31. Druckluftregeleinrichtung nach Anspruch 30,
**dadurch gekennzeichnet,**
**dass** die Kappen (6, 7) mittels Bajonettverschlusses (6a, 7a) im Gehäuse (13) lösbar gehalten sind.

32. Druckluftregeleinrichtung nach einem der Ansprüche 1 bis 31,
**dadurch gekennzeichnet,**
**dass** das Gehäuse (13) des Lufttrockners (12) an dem die Wegeventile (19,41,20) enthaltenden Ende (36) einen mit dem Luftauslass (18) in Verbindung stehenden Leitungsanschluss (37) für den Anschluss einer zum Anschlusselement führenden Leitung aufweist.

33. Druckluftregeleinrichtung nach einem der Ansprüche 1 bis 32,
**dadurch gekennzeichnet,**
**dass** der Abführkanal (23), vorzugsweise im Bereich seiner Ausgangsöffnung (24), ein Überdruckventil (2) aufweist.

34. Druckluftregeleinrichtung nach Anspruch 33,
**dadurch gekennzeichnet,**
**dass** das Überdruckventil (2) derart ausgebildet ist, dass dieses bei einem definierten Druck im Abführkanal (23) öffnet.

35. Druckluftregeleinrichtung nach Anspruch 33 oder 34,
**dadurch gekennzeichnet,**
**dass** das Überdruckventil (2) einen permanenten Durchlass (3) enthält.

36. Druckluftregeleinrichtung nach einem der Ansprüche 1 bis 35,
**dadurch gekennzeichnet,**
**dass** das Gehäuse (13) des Lufttrockners (12) und/oder der Trockenbehälter (60) aus einem Formteil aus Kunststoff oder Leichtmetallguss gebildet sind.

37. Druckluftregeleinrichtung nach einem oder mehreren der vorhergehenden Ansprüche,
**dadurch gekennzeichnet,**
**dass** das Gehäuse (13) des Lufttrockners (12) mit einer Stirnseite (38) direkt und derart an ein Gehäuse (50) der Druckmittelquelle (15) in Form eines Kompressors angesetzt ist, dass der Lufteinlass (17) zum Füllen mit dem Druckausgang (25) und der Abführkanal (23) mit seiner Ausgangsöffnung (24) zum Entleeren mit dem Saugraum (26) der Druckmittelquelle (15) in direkter Verbindung stehen.

38. Druckluftregeleinrichtung nach Anspruch 37,
**dadurch gekennzeichnet,**
**dass** der Kompressor (15) mit einem elektrischen Hochleistungsmotor (79) zu einer Einheit zusammengebaut ist, welcher sich unterhalb des Lufttrockners (12) und in zumindest geringem Abstand von diesem, dazu vorzugsweise parallel verlaufend, erstreckt.

39. Druckluftregeleinrichtung nach Anspruch 37 oder 38,
**dadurch gekennzeichnet,**
**dass** der Kompressor (15) als zweistufiger Hochdruckkompressor ausgebildet ist.

40. Druckluftregeleinrichtung nach einem der Ansprüche 37 bis 39,
**dadurch gekennzeichnet,**
**dass** der Kompressor (15) an einem etwa quer zur Längsmittelachse der Motorwelle (80) gerichteten Kolbenträger (86) am einen Ende dieses einen im Durchmesser großen ersten Kolben (87) für die erste Druckstufe und am gegenüberliegenden Ende einen im Durchmesser kleineren zweiten Kolben (88) für die zweite Druckstufe aufweist, wobei beide Kolben (87, 88) in einem jeweils zugeordneten ersten Zylinderraum (89) bzw. zweiten Zylinderraum (90) des Gehäuses (50) des Kompressors (15) geführt sind.

41. Druckluftregeleinrichtung nach Anspruch 40,
**dadurch gekennzeichnet,**
**dass** der zweite Druckraum (25) im zweiten Zylinderraum (90) über einen vorzugsweise im Kolbenträger (86) verlaufenden Verbindungskanal (94) mit dem ersten Druckraum (91) im ersten Zylinderraum (89) in Verbindung steht und mit dem Druckmedium aus dem ersten Druckraum (91) gespeist wird.

42. Druckluftregeleinrichtung nach einem der Ansprüche 37 bis 41,
**dadurch gekennzeichnet,**
**dass** der in den zweiten Druckraum (25) mündende Ausgang des Verbindungskanals (94) mittels mindestens eines Ventils (95) am zweiten Kolben (88) verschlossen ist, das bei der Verdichtung im zweiten Druckraum (25) unter dem Verdichtungsdruck geschlossen wird, hingegen in der Saugphase unter dem Druck im Verbindungskanal (94) geöffnet wird.

43. Druckluftregeleinrichtung nach einem der Ansprüche 37 bis 42,
**dadurch gekennzeichnet,**
**dass** der erste Druckraum (91) mittels mindestens eines Ventils (96) am ersten Kolben (87) oder Gehäuse (50) verschlossen ist, das bei der Verdichtung im ersten Druckraum (91) unter dem Verdichtungsdruck geschlossen wird, hingegen in der Saugphase geöffnet wird und den Saugraum (26) mit dem ersten Druckraum (91) verbindet.

44. Druckluftregeleinrichtung nach Anspruch 42 oder 43,
**dadurch gekennzeichnet,**
**dass** das jeweilige Ventil (95, 96) als Flatterventil mit einer beweglichen Platte als Ventilglied ausgebildet ist.

45. Druckluftregeleinrichtung nach einem der Ansprüche 37 bis 44,
**dadurch gekennzeichnet,**
**dass** der Saugraum (26) des Kompressors (15) durch den auf derjenigen Seite der Kolben (87, 88) vorgesehenen Innenraum des Gehäuses (50) gebildet ist, die dem jeweiligen ersten Druckraum (91) bzw. zweiten Druckraum (25) abgewandt ist.

46. Druckluftregeleinrichtung nach einem der Ansprüche 37 bis 45,
**dadurch gekennzeichnet,**
**dass** jeder Kolben (87, 88) einen vorzugsweise aus Kunststoff gebildeten Kolbenring (97) und Führungsring (98) aufweist.

47. Druckluftregeleinrichtung nach einem der Ansprüche 37 bis 46,
**dadurch gekennzeichnet,**
**dass** der Kolbenträger (86) mit zumindest einem der beiden Kolben (87, 88) ein einstückiges Bauteil bildet.

48. Druckluftregeleinrichtung nach Anspruch 47,
**dadurch gekennzeichnet,**
**dass** das einstückige Bauteil als Formteil aus Kunststoff oder Aluminiumdruckguss ausgebildet ist.

49. Druckluftregeleinrichtung nach einem der Ansprüche 37 bis 48,
**dadurch gekennzeichnet,**
**dass** der Kolbenträger (86) mittels eines Pleuels (99) angetrieben ist, das auf einem Exzenterabschnitt (81) der Motorwelle (80) drehbar gelagert ist und in Abstand davon an dem Kolbenträger (86) drehbar gelagert ist.

50. Druckluftregeleinrichtung nach einem der Ansprüche 37 bis 49,
**dadurch gekennzeichnet,**
**dass** der mit dem Gehäuse (13) und dem Lufteinlass (17) in Verbindung stehende zweite Druckraum (25) mittels eines Überdruckventils (110) gesteuert ist, das bei einem Druck in dem zweiten Druckraum (25), der größer ist als der Druck im Lufteinlass (17), öffnet.

51. Druckluftregeleinrichtung nach einem der Ansprüche 37 bis 50,
**dadurch gekennzeichnet,**
**dass** das Gehäuse (50) des Kompressors (15) in Abstand unterhalb des zweiten Zylinderraums (25) einen in den Saugraum (26) mündenden Kanal (85) enthält, an den der Abführkanal (23) mit der Ausgangsöffnung (24) angeschlossen ist.

52. Druckluftregeleinrichtung nach einem der Ansprüche 37 bis 51,
**dadurch gekennzeichnet,**
**dass** der Kompressor (15) derart ausgebildet ist, dass im ersten Druckraum (91) ein Druck in der Größenordnung von 1 bis 10 bar und im zweiten Druckraum (25) ein Druck in der Größenordnung von 8 bis 40 bar erzeugt wird.

53. Druckluftregeleinrichtung, nach einem oder mehreren vorhergehenden Ansprüchen
**dadurch gekennzeichnet,**
**dass** der Lufttrockner (12) sowohl beim Füllen als auch beim Entleeren unmittelbar mit dem Anschlusselement verbunden ist.

54. Druckluftregeleinrichtung nach Anspruch 53,
**dadurch gekennzeichnet,**
**dass** das erste steuerbare Wegeventil (19) beim Entleeren unmittelbar an den Lufteinlass (17) des Lufttrockners (12) angeschlossen ist und eine Druck-Schnellabsenkung und/oder gesteuerte Druck-Absenkung ermöglicht.

55. Druckluftregeleinrichtung nach Anspruch 53 oder 54,
**dadurch gekennzeichnet,**
**dass** das erste steuerbare Wegeventil (19) pneumatisch steuerbar ist und dessen Steuereingang (27) an den pneumatischen Steuerausgang des zweiten steuerbaren Wegeventils (20) unmittelbar angeschlossen ist.

56. Druckluftregeleinrichtung nach Anspruch 55,
**dadurch gekennzeichnet,**
**dass** der pneumatische Steuereingang (27) des ersten steuerbaren Wegeventils (19) beim Entleeren über eine Druckmittelleitung (1) unmittelbar mit dem Lufttrockner (12) verbunden und mit dem Druck in dem Anschlusselement beaufschlagt ist.

57. Druckluftregeleinrichtung nach Anspruch 55 oder 56,
**dadurch gekennzeichnet,**
**dass** der pneumatische Steuereingang (27) des ersten steuerbaren Wegeventils (19) beim Entleeren gegen die Wirkung einer auf den pneumatischen Steuereingang (27) wirkenden Rückstellkraft mit dem Druck in dem Anschlusselement beaufschlagbar ist.

## Claims

1. Compressed air control system (10), having an air drier (12), in whose housing (13) a pot-shaped drying container (60) is contained, the interior (63) of which can be connected by the housing (13) on the one hand to a pressure medium source (15) and on the other hand to a connection element in the form of a pressure reservoir and/or of a pneumatic spring via a valve (16) which opens to the said connection element, the housing (13) having at least one air inlet (17) and at least one air outlet (18) respectively for the compressed air, which, for the filling of the at least one connection element, is guided in a flow direction from the air inlet (17) through the drying container (60) to the air outlet (18) and, for the emptying, is evacuated in the opposite flow direction from the air outlet (18) through the drying container (60) and the housing (13) and out of the latter, comprising at least two controllable directional valves for the emptying operation, which are integrated and installed in the housing (13) of the air drier (12) and of which at least one controllable directional valve (19) controls with its valve member (34) an evacuation duct (23) running in the housing (13) along the latter, **characterized in that** the first directional valve (19), which controls the evacuation duct (23), is driven by at least one further controllable directional valve (20) with the pressure in the emptying operation, **in that** the first directional valve (19) controls the passage between an inlet in the form of a first housing opening (21) of a duct (23), which opening is open towards a housing interior (14), and an outlet of the said duct in the form of a second housing opening (22), connected to by the evacuation duct (23), which with at least one output opening (24) opens out into the housing (50) of the pressure medium source (15) connectable thereto and, in the emptying operation, serves for the removal of air to there, and **in that** a third controllable directional valve (41) is integrated and installed in the housing (13) of the air drier (12), which housing, in the emptying operation, serves for the admission of the air into the housing interior (14) and the drying container (60).

2. Compressed air control system according to Claim 1, **characterized in that** in the valve member (34) of the first controllable directional valve (19) there is integrated a pressure-relief valve (39), the inlet duct (39a) of which is connected to the inlet (21) of the duct (23) controlled by the valve member (34) and the outlet duct (39b) of which opens out into the evacuation duct (23).

3. Compressed air control system according to Claim 2, **characterized in that** the pressure-relief valve (39) of the first controllable directional valve (19) is configured for an opening pressure equal to or greater than the operating pressure, preferably 18 to 20 bar.

4. Compressed air control system according to one of Claims 1 to 3, **characterized in that** the at least one further controllable directional valve (20) is electrically controllable and the valve member (31) of which closes off the opening (32) of a control duct (28), connected to the air outlet (18), in the housing (13), or, in the emptying operation, opens up the said opening and opens it to a control space (49), which is connected by a control duct (51) in the housing (13) to a control input (27) of the first controllable directional valve (19) for the pneumatic driving thereof.

5. Compressed air control system according to one of Claims 1 to 4, **characterized in that** the third controllable directional valve (41) has a pneumatic control input (42), which is connected by a control duct (52) in the housing (13) to the control space (49) of the further controllable directional valve (20).

6. Compressed air control system according to Claim 1, **characterized in that** the third controllable directional valve (41) has a first connection in the form of a housing opening (43) which is connected to a feed duct (44) that is configured in the housing (13) of the air drier (12), is connected to the air outlet (18) and, via the latter, is fed with the waste air in the emptying operation.

7. Compressed air control system according to Claim 1 or 6, **characterized in that** the third controllable directional valve (41) has a second connection in the form of a chamber (45), which preferably opens axially towards the housing interior (14) and from which, in the emptying operation, air can be passed into the employed drying container (60).

8. Compressed air control system according to Claim 6 or 7, **characterized in that** the feed duct (44) has a first duct portion (64), which branches off transversely, preferably radially, from the air outlet duct (18), a second duct portion (65), which extends in extension of the first duct portion (64) through into the chamber (45) of the third controllable directional valve (41) and is placed upstream of and axially offset relative to the first duct portion (64), and a longitudinally running third duct portion (66), which interconnects the first duct portion (64) and the second duct portion (65).

9. Compressed air control system according to Claim 8, **characterized in that** the first duct portion (64) and the second duct portion (65) are configured as grooves which are open towards the base (61) of the employed drying container (60).

10. Compressed air control system according to Claim 8 or 9, **characterized in that** the second duct portion (65) and the third duct portion (66), in particular the grooves which form these, are covered by means of wall parts (62) of the base (61) of the drying container (60).

11. Compressed air control system according to one of Claims 6 to 10, **characterized in that** the flow area of the feed duct (44), in particular of the first, second and third duct portions (64, 65, 66), is matched to the respectively predefined desired air flow rate in the emptying operation and is dimensioned differently in accordance therewith.

12. Compressed air control system according to one of Claims 6 to 11, **characterized in that** the flow area of the feed duct (44), in particular of the first, second and third duct portions (64, 65, 66), measures between 2 and 15 mm².

13. Compressed air control system according to one of Claims 7 to 12, **characterized in that** the base (61) of the drying container (60) has a first passage (57), connected to the axially opening chamber (45), for the admission of the air into the drying container (60) in the emptying operation.

14. Compressed air control system according to one of Claims 6 to 13, **characterized in that** the base (61) of the drying container (60) has a second passage (58), opening into the air outlet (18) and the feed duct (44), for the discharge of the air from the drying container (60) and admission into the air outlet (18) in the filling operation.

15. Compressed air control system according to Claim 14, **characterized in that** the second passage (58) of the drying container (60) contains a valve (16) which controls the latter and has a spring-loaded valve member (53) roughly coaxial to the air outlet (18), which spring-loaded valve member closes off the second passage (58) under the action of the emptying pressure and/or of its spring (56) and, in the filling operation, opens it in the opposite direction under the action of the filling pressure.

16. Compressed air control system according to one of Claims 1 to 15, **characterized in that** the drying container (60) has on the inner side of the base (61) flow guide ducts (68) running in the peripheral direction.

17. Compressed air control system according to Claim 16, **characterized in that** the flow guide ducts (68) run along roughly concentric circles.

18. Compressed air control system according to Claim 16 or 17, **characterized in that** the flow guide ducts (68) are formed by grooves (69) which are open to the container space (63).

19. Compressed air control system according to Claim 18, **characterized in that** the grooves (69) are interconnected by means of individual radially running grooves (70).

20. Compressed air control system according to one of Claims 1 to 19, **characterized in that** the drying container (60) has, on the end (71) opposite the base (61), outlets (72) for the air guided through in the emptying operation.

21. Compressed air control system according to one of Claims 1 to 20, **characterized in that** the drying container (60), with the formation of an annular gap (73) between its pot wall (74) and the housing (13) of the air drier (12), is held in the said housing, the annular gap (73) serving for the return of the air which in the emptying operation exits from the end side of the drying container (60) to the opposite end of the housing (13) and into the duct (23) limited between the base (61) of the drying container (60) and the housing (13) and controlled by the first controllable directional valve (19).

22. Compressed air control system according to Claim 1 to 21, **characterized in that** spacers (75) are provided between the drying container (60) and the housing interior (14) on the end side and/or peripheral side of the drying container (60).

23. Compressed air control system according to one of Claims 1 to 22, **characterized in that** the first controllable directional valve (19) and/or the third controllable directional valve (41) is held in the closing position counter to the action of a restoring force, in particular spring force (spring 30, 46), which for the emptying operation can be surmounted by the control pressure that acts upon the respective control input (27, 42).

24. Compressed air control system according to one of Claims 1 to 23, **characterized in that** the first directional valve (19) and/or the second directional valve (20) and/or the third directional valve (41) and/or the valve (16) of the drying container (60) has as the actuated valve member (34, 31, 47, 53) a pin or piston or valve disc guided in the housing (13) or on the drying container (60).

25. Compressed air control system according to one of Claims 1 to 24, **characterized in that** to the valve member (34, 37) of the first directional valve (19) and/or of the third directional valve (41) there is assigned, for actuation by pneumatic action, a control member (35, 48) guided in the housing (13), which control member is disposed coaxially to the associated valve member (34, 47) and is connected thereto, preferably is integral therewith.

26. Compressed air control system according to Claim 25, **characterized in that** the active area of the control member (35, 48) of the first directional valve (19) and/or of the third directional valve (41) is greater than the active area of the respectively associated valve member (34, 47).

27. Compressed air control system according to one of Claims 1 to 26, **characterized in that** the first directional valve (19) and the third directional valve (41), together with the second directional valve (20), are disposed at the one end of the housing (13) of the air drier (12) in respective housing fixtures (8, 9, 11) for these.

28. Compressed air control system according to Claim 27, **characterized in that** the first directional valve (19) and the third directional valve (41) are disposed parallel and with transverse offset to one another.

29. Compressed air control system according to Claim 27 or 28, **characterized in that** the housing fixtures (8, 9) for the first directional valve (19) and/or the third directional valve (41) are formed respectively from stepped bores, of which the one bore (54, 55) of smaller diameter receives and at the same time guides the respective valve member (34, 47), and the other bore (77, 78) of larger diameter receives and at the same time guides the respective control member (35, 48).

30. Compressed air control system according to Claim 29, **characterized in that** the housing fixtures (8, 9), at least of the first directional valve (19) and/or of the third directional valve (41), are open towards the end of the housing (13) and are closed off there by means of caps (6, 7) supporting the respective springs (30, 46).

31. Compressed air control system according to Claim 30, **characterized in that** the caps (6, 7) are held detachably in the housing (13) by means of a bayonet fastening (6a, 7a).

32. Compressed air control system according to one of Claims 1 to 31, **characterized in that** the housing (13) of the air drier (12), at the end (36) containing the directional valves (19, 41, 20), has a line connection (37), connected to the air outlet (18)., for the connection of a line leading to the connection element.

33. Compressed air control system according to one of Claims 1 to 32, **characterized in that** the evacuation duct (23) has, preferably in the region of its output opening (24), a pressure-relief valve (2).

34. Compressed air control system according to Claim 33, **characterized in that** the pressure-relief valve (2) is configured in such a way that it opens at a defined pressure in the evacuation duct (23).

35. Compressed air control system according to Claim 33 or 34, **characterized in that** the pressure-relief valve (2) contains a permanent passage (3).

36. Compressed air control system according to one of Claims 1 to 35, **characterized in that** the housing (13) of the air drier (12) and/or of the drying container (60) is formed of a shaped part made of plastic or light-metal casting.

37. Compressed air control system according to one of the preceding claims, **characterized in that** the housing (13) of the air drier (12) is attached with an end side (38) directly and in such a way to a housing (50) of the pressure medium source (15) in the form of a compressor that the air inlet (17), for the filling operation, is directly connected to the pressure output (25), and the evacuation duct (23), for the emptying operation, is directly connected with its output opening (24) to the suction space (26) of the pressure medium source (15).

38. Compressed air control system according to Claim 37, **characterized in that** the compressor (15) is built together with an electric heavy-duty motor (79) to form a unit, which extends beneath the air drier (12) and at at least a short distance apart from the latter, preferably running parallel thereto.

39. Compressed air control system according to Claim 37 or 38, **characterized in that** the compressor (15) is configured as a two-stage high-pressure compressor.

40. Compressed air control system according to one of Claims 37 to 39, **characterized in that** the compressor (15) has on a piston carrier (86) directed roughly transversely to the longitudinal centre axis of the motor shaft (80), at the one end of the said piston carrier, a first piston (87) of large diameter for the first pressure stage and, at the opposite end, a second piston (88) of smaller diameter for the second pressure stage, both pistons (87, 88) being guided in a respectively assigned first cylinder space (89) and second cylinder space (90) of the housing (50) of the compressor (15).

41. Compressed air control system according to Claim 40, **characterized in that** the second pressure space (25) in the second cylinder space (90) is connected by a connecting duct (94), running preferably in the piston carrier (86), to the first pressure space (91) in the first cylinder space (89) and is fed with the pressure medium from the first pressure space (91).

42. Compressed air control system according to one of Claims 37 to 41, **characterized in that** the output of the connecting duct (94), which opens out into the second pressure space (25), is closed off by means of a valve (95) on the second piston (88), which valve, upon the compression in the second pressure space (25), is closed under the compression pressure, yet in the suction phase is opened under the pressure in the connecting duct (94).

43. Compressed air control system according to one of Claims 37 to 42, **characterized in that** the first pressure space (91) is closed off by means of at least one valve (96) on the first piston (87) or housing (50), which valve, upon the compression in the first pressure space (91), is closed under the compression pressure, yet in the suction phase is opened and connects the suction space (26) to the first pressure space (91).

44. Compressed air control system according to Claim 42 or 43, **characterized in that** the respective valve (95, 96) is configured as a flutter valve having a movable plate as the valve member.

45. Compressed air control system according to one of Claims 37 to 44, **characterized in that** the suction space (26) of the compressor (15) is formed by the internal space of the housing (50), which internal space is provided on that side of the pistons (87, 88) which is facing away from the respective first pressure space (91) and second pressure space (25).

46. Compressed air control system according to one of Claims 37 to 45, **characterized in that** each piston (87, 88) has a piston ring (97) and guide ring (98), preferably made of plastic.

47. Compressed air control system according to one of Claims 37 to 46, **characterized in that** the piston carrier (86) forms with at least one of the two pistons (87, 88) a one-piece component.

48. Compressed air control system according to Claim 47, **characterized in that** the one-piece component is configured as a shaped part made of plastic or aluminium die casting.

49. Compressed air control system according to one of Claims 37 to 48, **characterized in that** the piston carrier (86) is driven by means of a connecting rod (99), which is rotatably mounted on an eccentric portion (81) of the motor shaft (80) and, at a distance therefrom, is rotatably mounted on the piston carrier (86).

50. Compressed air control system according to one of Claims 37 to 49, **characterized in that** the second pressure space (25) connected to the housing (13) and to the air inlet (17) is controlled by means of a pressure-relief valve (110), which opens at a pressure in the second pressure space (25) which is greater than the pressure in the air inlet (17).

51. Compressed air control system according to one of Claims 37 to 50, **characterized in that** the housing (50) of the compressor (15) contains, at a distance beneath the second cylinder space (25), a duct (85), which opens out into the suction space (26) and to which the evacuation duct (23) is connected with the output opening (24).

52. Compressed air control system according to one of Claims 37 to 51, **characterized in that** the compressor (15) is configured in such a way that in the first pressure space (91) a pressure in the order of magnitude of 1 to 10 bar and in the second pressure space (25) a pressure in the order of magnitude of 8 to 40 bar is generated.

53. Compressed air control system according to one of more of the preceding claims, **characterized in that** the air drier (12) is connected directly to the connection element both in the filling and in the emptying operations.

54. Compressed air control system according to Claim 53, **characterized in that** the first controllable directional valve (19), in the emptying operation, is connected directly to the air inlet (17) of the air drier (12) and allows a rapid lowering of pressure and/or a controlled lowering of pressure.

55. Compressed air control system according to Claim 53 or 54, **characterized in that** the first controllable directional valve (19) is pneumatically controllable and its control input (27) is directly connected to the pneumatic control output of the second controllable directional valve (20).

56. Compressed air control system according to Claim 55, **characterized in that** the pneumatic control input (27) of the first controllable directional valve (19), in the emptying operation, is connected by a pressure medium line (1) directly to the air drier (12) and is subjected to the pressure in the connection element.

57. Compressed air control system according to Claim 55 or 56, **characterized in that** the pneumatic control input (27) of the first controllable directional valve (19), in the emptying operation, can be subjected to the pressure in the connection element counter to the action of a restoring force acting on the pneumatic control input (27).

## Revendications

1. Dispositif de réglage d'air comprimé (10), comprenant un déshydrateur d'air (12), dont le boîtier (13) renferme un récipient sec (60) en forme de pot, dont l'intérieur (63) peut être relié par le boîtier (13) d'une part à une source d'agent de pression (15) et d'autre part à un élément de raccordement sous la forme d'un réservoir de pression et/ou d'un coussin d'air au moyen d'une vanne (16) ouvrant vers cet élément, le boîtier (13) présentant au moins une entrée d'air (17) et au moins une sortie d'air (18) respectivement pour l'air comprimé, qui est guidé pour le remplissage de l'au moins un élément de raccordement dans un sens d'écoulement de l'entrée d'air (17) à travers le récipient sec (60) vers la sortie d'air (18) et est évacué pour le vidage dans le sens d'écoulement opposé depuis la sortie d'air (18) à travers le récipient sec (60) et le boîtier (13) et à partir de celui-ci, comprenant au moins deux soupapes à canaux contrôlables pour le vidage, qui sont intégrées et montées dans le boîtier (13) du déshydrateur d'air (12) et dont au moins un distributeur à voies (19) contrôlable commande avec son élément de vanne (34) un canal d'évacuation (23) agencé dans le boîtier (13) le long de celui-ci,
**caractérisé en ce que**
le premier distributeur à voies (19) commandant le canal d'évacuation (23) est activé par au moins un autre distributeur à voies (20) contrôlable avec la pression lors du vidage, **en ce que** le premier distributeur à voies (19) commande le passage entre une entrée sous la forme d'une première couverture de boîtier (21), ouverte en direction de l'intérieur du boîtier (14), d'un canal (23) et une sortie de celui-ci sous la forme d'une seconde ouverture de boîtier (22), à laquelle se raccorde le canal d'évacuation (23), qui débouche par au moins une ouverture de sortie (24) dans le boîtier (50) de la source d'agent de pression (15) pouvant y être raccordée et sert à cet endroit à la purge d'air lors du vidage, et **en ce qu'**un troisième distributeur à voies (41) contrôlable est intégré et montée dans le boîtier (13) du déshydrateur d'air (12), qui, lors du vidage, sert à l'entrée de l'air à l'intérieur du boîtier (14) et dans le récipient sec (60).

2. Dispositif de réglage d'air comprimé selon la revendication 1,
**caractérisé en ce que**
dans l'élément de vanne (34) du premier distributeur à voies (19) contrôlable est intégrée une vanne de surpression (39), dont le canal d'entrée (39a) est en liaison avec l'entrée (21) du canal (23) commandé par l'élément de vanne (34) et dont le canal de sortie (39b) débouche dans le canal d'évacuation (23).

3. Dispositif de réglage d'air comprimé selon la revendication 2,
**caractérisé en ce que**
la vanne de suppression (39) du premier distributeur à voies (19) contrôlable est conçue pour une pression d'ouverture égale ou supérieure à la pression de service, de préférence de 18 à 20 bars.

4. Dispositif de réglage d'air comprimé selon l'une quelconque des revendications 1 à 3,
**caractérisé en ce que**
l'au moins un autre distributeur à voies (20) contrôlable peut être commandé de façon électrique et son élément de vanne (31) ferme l'ouverture (32) d'un canal de commande (28) dans le boîtier (13), qui est en liaison avec la sortie d'air (18), ou la libère lors du vidage et ouvre sur un compartiment de commande (49) qui est en liaison au moyen d'un canal de commande (51) dans le boîtier (13) avec une entrée de commande (27) du premier distributeur à voies (19) contrôlable pour son activation pneumatique.

5. Dispositif de réglage d'air comprimé selon l'une quelconque des revendications 1 à 4,
**caractérisé en ce que**
le troisième distributeur à voies (41) contrôlable présente une entrée de commande (42) pneumatique, qui est en liaison par un canal de commande (52) dans le boîtier (13) avec l'espace de commande (49) de l'autre distributeur à voies (20) contrôlable.

6. Dispositif de réglage d'air comprimé selon la revendication 1,
**caractérisé en ce que**
le troisième distributeur à voies (41) contrôlable présente un premier branchement sous la forme d'une ouverture de boîtier (43), qui est en liaison avec un canal d'arrivée (44), lequel est réalisé dans le boîtier (13) du déshydrateur d'air (12), est en liaison avec la sortie d'air (18) et est alimenté avec l'air évacué lors du vidage par cette sortie.

7. Dispositif de réglage d'air comprimé selon la revendication 1 ou 6,
**caractérisé en ce que**
le troisième distributeur à voies (41) contrôlable présente un second branchement sous la forme d'une chambre (45) ouvrant de préférence axialement en direction de l'intérieur du boîtier (14), par laquelle, lors du vidage, de l'air peut être introduit à l'intérieur du récipient sec (60) utilisé.

8. Dispositif de réglage d'air comprimé selon la revendication 6 ou 7,
**caractérisé en ce que**
le canal d'arrivée (44) présente un premier tronçon de canal (64) partant du canal de sortie d'air (18) transversalement, de préférence radialement, un second tronçon de canal (65) s'étendant dans le prolongement du premier tronçon de canal (64) jusque dans la chambre (45) du troisième distributeur à voies (41) contrôlable, placé en amont et décalée axialement par rapport au premier tronçon de canal (64) et un troisième tronçon de canal (66) agencé dans la longueur, reliant le premier tronçon de canal (64) et le second tronçon de canal (65) entre eux.

9. Dispositif de réglage d'air comprimé selon la revendication 8,
**caractérisé en ce que**
le premier tronçon de canal (64) et le second tronçon de canal (65) sont réalisés sous la forme de rainure ouvertures ouvertes dans le sens axial vers le fond (61) du récipient sec (60) utilisé.

10. Dispositif de réglage d'air comprimé selon la revendication 8 ou 9,
**caractérisé en ce que**
le second tronçon de canal (65) et le troisième tronçon de canal (66), en particulier les rainures formant ces tronçons, sont recouverts au moyen de parties de paroi (62) du fond (61) du récipient sec (60).

11. Dispositif de réglage d'air comprimé selon l'une quelconque des revendication 6 à 10,
**caractérisé en ce que**
la section de passage du canal d'arrivée (44), en particulier du premier, du second et du troisième tronçons du canal (64, 65, 66), est adaptée au débit d'air théorique respectivement prédéfini lors du vidage et est dimensionnée avec une grandeur différente en adaptation à ce débit.

12. Dispositif de réglage d'air comprimé selon l'une quelconque des revendications 6 à 11,
**caractérisé en ce que**
la section de passage du canal d'arrivée (44), en particulier du premier, du second et du troisième tronçons de canal (64, 65, 66), est comprise entre 2 et 15 mm².

13. Dispositif de réglage d'air comprimé selon l'une quelconque des revendications 7 à 12,
**caractérisé en ce que**
le fond (61) du récipient sec (60) présente un premier passage (57), en liaison avec la chambre (45) ouvrant dans le sens axial, pour l'entrée de l'air dans le récipient sec (60) lors du vidage.

14. Dispositif de réglage d'air comprimé selon l'une quelconque des revendications 6 à 13,
**caractérisé en ce que**
le fond (61) du récipient sec (60) présente un second passage (58) débouchant dans la sortie d'air (18) et le canal d'arrivée (44) pour la sortie de l'air provenant du récipient sec (60) et l'entrée dans la sortie d'air (18) lors du remplissage.

15. Dispositif de réglage d'air comprimé selon la revendication 14,
**caractérisé en ce que**
le second passage (58) du récipient sec (60) contient une vanne (16) contrôlant celui-ci, qui présente un élément de vanne (53) sollicité par ressort, à peu près coaxial par rapport à la sortie d'air (18), qui ferme le second passage (58) sous l'effet de la pression de vidage et/ou de son ressort (56) et ouvre dans le sens contraire sous l'effet de la pression de remplissage lors du remplissage.

16. Dispositif de réglage d'air comprimé selon l'une quelconque des revendications 1 à 15,
**caractérisé en ce qu'**
un récipient sec (60) présente sur le côté intérieur du fond (61) des canaux de guidage d'écoulement (68) agencés dans le sens périphérique.

17. Dispositif de réglage d'air comprimé selon la revendication 16,
**caractérisé en ce que**
les canaux de guidage d'écoulement (68) sont agencés le long de cercles à peu près concentriques.

18. Dispositif de réglage d'air comprimé selon la revendication 16 ou 17,
**caractérisé en ce que**
les canaux de guidage d'écoulement (68) sont formés des rainures (69) ouvertes vers l'espace du récipient (63) .

19. Dispositif de réglage d'air comprimé selon la revendication 18,
**caractérisé en ce que**
les rainures (69) sont en liaison entre elles au moyen de rainures (70) individuelles et agencées radialement.

20. Dispositif de réglage d'air comprimé selon l'une quelconque des revendications 1 à 19,
**caractérisé en ce que**
le récipient sec (60) présente sur l'extrémité (71) opposée au fond (61) des sorties (72) pour l'air guidé à travers ces sorties lors du vidage.

21. Dispositif de réglage d'air comprimé selon l'une quelconque des revendications 1 à 20,
**caractérisé en ce que**
le récipient sec (60) est maintenu en formant une fente annulaire (73) entre sa paroi de pot (74) et le boîtier (13) du déshydrateur d'air (12) dans celui-ci, la fente annulaire (73) servant au retour de l'air sortant lors du vidage côté extrémité du récipient sec (60) vers l'extrémité opposée du boîtier (13) et dans le canal (23) commandé par le premier distributeur à voies (19) contrôlable et délimité entre le fond (61) du récipient sec.

22. Dispositif de réglage d'air comprimé selon les revendications 1 à 21,
**caractérisé en ce que**
des écarteurs (75) sont prévus entre le récipient sec (60) et l'intérieur du boîtier (14) côté extrémité et/ou côté pourtour du récipient sec (60).

23. Dispositif de réglage d'air comprimé selon l'une quelconque des revendications 1 à 22,
**caractérisé en ce que**
le premier distributeur à voies (19) contrôlable et/ou le troisième distributeur à voies (41) contrôlable est/sont maintenu(s) contre l'effet d'une force de rappel, en particulier une force de ressort (ressort 30, 46) dans la position de fermeture, qui peut être surmontée pour le vidage par la pression de commande alimentant l'entrée de commande (27, 42) respective.

24. Dispositif de réglage d'air comprimé selon l'une quelconque des revendications 1 à 23,
**caractérisé en ce que**
le premier distributeur à voies (19) et/ou le second distributeur à voies (20) et/ou le troisième distributeur à voies (41) et/ou la soupape (16) du récipient sec (60) présentent comme élément de vanne (34, 31, 47, 53) actionné une tige ou un piston ou une tête de soupape guidée dans le boîtier (13) ou sur le récipient sec (60).

25. Dispositif de réglage d'air comprimé selon l'une quelconque des revendications 1 à 24,
**caractérise en ce qu'**
à l'élément de vanne (34, 47) du premier distributeur à voies (19) et/ou du troisième distributeur à voies (41) est attribué pour l'actionnement par l'alimentation pneumatique un élément de commande (35, 48) guidé dans le boîtier (13), qui est disposé sur le même axe que l'élément de vanne (34, 47) attribué et est relié à celui-ci, de préférence d'une seule pièce.

26. Dispositif de réglage d'air comprimé selon la revendication 25,
**caractérisé en ce que**
la surface active de l'élément de commande (35, 48) du premier distributeur à voies (19) et/ou du troisième distributeur à voies (41) est plus grande que la surface active de l'élément de vanne (34, 47) respectivement attribué.

27. Dispositif de réglage d'air comprimé selon l'une quelconque des revendications 1 à 26,
**caractérisé en ce que**
le premier distributeur à voies (19) et le troisième distributeur à voies (41) sont disposés en même temps que le second distributeur à voies (20) sur une extrémité du boîtier (13) du déshydrateur d'air (12) dans des logements de boîtier (8, 9, 11) respectifs à cet effet.

28. Dispositif de réglage d'air comprimé selon la revendication 27,
**caractérisé en ce que**
le premier distributeur à voies (19) et le troisième distributeur à voies (41) sont disposés parallèlement entre eux et avec un décalage transversal.

29. Dispositif de réglage d'air comprimé selon la revendication 27 ou 28,
**caractérisé en ce que**
les logements de boîtier (8, 9) pour le premier distributeur à voies (19) et/ou le troisième distributeur à voies (41) sont formés respectivement d'alésages étagés, dont l'alésage (54, 55) plus petit en diamètre reçoit l'élément de vanne (34, 47) respectif et l'autre alésage (77, 78) plus grand en diamètre reçoit l'élément de commande (35, 48) respectif et le guide en même temps.

30. Dispositif de réglage d'air comprimé selon la revendication 29,
**caractérisé en ce que**
les logements de boîtier (8, 9) au moins du premier distributeur à voies (19) et/ou du troisième distributeur à voies (41) sont ouverts en direction de l'extrémité du boîtier (13) et sont fermés en cet endroit au moyen des capots (6, 7) supportant les ressorts (30, 46) respectifs.

31. Dispositif de réglage d'air comprimé selon la revendication 30,
**caractérisé en ce que**
les capots (6, 7) sont maintenus de façon amovible dans le boîtier (13) au moyen d'une fermeture à baïonnette (6a, 7a).

32. Dispositif de réglage d'air comprimé selon l'une quelconque des revendications 1 à 31,
**caractérisé en ce que**
le boîtier (13) du déshydrateur d'air (12) présente sur l'extrémité (36) contenant les soupapes à canaux (19, 41, 20) un branchement de conduite (37) en liaison avec la sortie d'air (18) pour le branchement d'une conduite allant à l'élément de branchement.

33. Dispositif de réglage d'air comprimé selon l'une quelconque des revendications 1 à 32,
**caractérisé en ce que**
le canal d'évacuation (23) présente une vanne de surpression (2), de préférence dans la zone de son ouverture de sortie (24).

34. Dispositif de réglage d'air comprimé selon la revendication 33,
**caractérisé en ce que**
la vanne de surpression (2) est réalisée de telle sorte que celle-ci s'ouvre avec une pression définie dans le canal d'évacuation (23).

35. Dispositif de réglage d'air comprimé selon la revendication 33 ou 34,
**caractérisé en ce que**
la vanne de surpression (2) contient un passage (3) permanent.

36. Dispositif de réglage d'air comprimé selon l'une quelconque des revendications 1 à 35,
**caractérisé en ce que**
le boîtier (13) du déshydrateur d'air (12) et/ou le récipient sec (60) sont formés d'une pièce coulée en plastique ou d'une pièce coulée en métal léger.

37. Dispositif de réglage d'air comprimé selon l'une quelconque ou plusieurs des revendications précédentes,
**caractérisé en ce que**
le boîtier (13) du déshydrateur d'air (12) est placé par un côté avant (38) directement et sur un boîtier (50) de la source d'agent de pression (15) sous la forme d'un compresseur de telle sorte que l'entrée d'air (17) pour le remplissage est en liaison directe avec la sortie de pression (25) et le canal d'évacuation (23) avec son ouverture de sortie (24) pour le vidage est en liaison directe avec l'espace d'aspiration (26) de la source d'agent de pression (15).

38. Dispositif de réglage d'air comprimé selon la revendication 37,
**caractérisé en ce que**
le compresseur (15) est assemblé avec un moteur électrique à haut rendement (79) pour former une unité qui s'étend au-dessous du déshydrateur d'air (12) et à une distance au moins faible de celui-ci, agencé de préférence parallèlement à celui-ci.

39. Dispositif de réglage d'air comprimé selon la revendication 37 ou 38,
**caractérisé en ce que**
le compresseur (15) est conçu comme un compresseur haute pression à deux niveaux.

40. Dispositif de réglage d'air comprimé selon l'une quelconque des revendications 37 à 39,
**caractérisé en ce que**
le compresseur (15) présente sur un support de piston (86), dirigé à peu près transversalement à l'axe médian longitudinal de l'arbre de moteur (80), sur une extrémité de celui-ci, un premier piston (87) grand en diamètre pour le premier étage de pression et sur l'extrémité opposée un second piston (88) plus petit en diamètre pour le second étage de pression, les deux pistons (87, 88) étant guidés dans un premier espace de cylindre (89) respectivement attribué et dans un espace de cylindre (90) du boîtier (50) du compresseur (15).

41. Dispositif de réglage d'air comprimé selon la revendication 40,
**caractérisé en ce que**
le second espace de pression (25) est en liaison dans le second espace de cylindre (90) au moyen d'un canal de liaison (94) agencé de préférence dans le support de piston (86) avec le premier espace de pression (91) dans le premier espace de cylindre (89) et est alimenté avec l'agent de pression provenant du premier espace de pression (91).

42. Dispositif de réglage d'air comprimé selon l'une quelconque des revendications 37 à 41,
**caractérisé en ce que**
la sortie, débouchant dans le second espace de pression (25), du canal de liaison (94) est fermée au moyen d'au moins une vanne (95) sur le second piston (88), laquelle est fermée lors de la compression dans le second espace de pression (25) sous la pression de compression, qu'elle est ouverte dans la phase d'aspiration sous la pression dans le canal de liaison (94).

43. Dispositif de réglage d'air comprimé selon l'une quelconque des revendications 37 à 42,
**caractérisé en ce que**
le premier espace de pression (91) est fermé au moyen d'une vanne (96) sur le premier piston (87) ou boîtier (50), qui est fermée lors de la compression dans le premier espace de pression (91) sous la pression de compression, est en revanche ouverte lors de la phase d'aspiration et relie l'espace d'aspiration (26) au premier espace de pression (91).

44. Dispositif de réglage d'air comprimé selon la revendication 42 ou 43,
**caractérisé en ce que**
la vanne (95, 96) respective est conçue comme une vanne flottante avec une plaque mobile comme élément de vanne.

45. Dispositif de réglage d'air comprimé selon l'une quelconque des revendications 37 à 44,
**caractérisé en ce que**
l'espace d'aspiration (26) du compresseur (15) est formé par l'espace intérieur du boîtier (50) prévu sur le côté des pistons (87, 88) qui est opposé au premier espace de pression (91) respectif ou au second espace de pression (25).

46. Dispositif de réglage d'air comprimé selon l'une quelconque des revendications 37 à 45,
**caractérisé en ce que**
chaque piston (87, 88) présente un segment de piston (97) formé de préférence en plastique et une bague de guidage (98).

47. Dispositif de réglage d'air comprimé selon l'une quelconque des revendications 37 à 46
**caractérisé en ce que**
le support de piston (86) forme avec au moins l'un des deux pistons (87, 88) un composant d'une seule pièce.

48. Dispositif de réglage d'air comprimé selon la revendication 47,
**caractérisé en ce que**
le composant d'une seule pièce est conçu comme une pièce coulée en plastique ou une pièce coulée en aluminium.

49. Dispositif de réglage d'air comprimé selon l'une quelconque des revendications 37 à 48,
**caractérisé en ce que**
le support de piston (86) est entraîné au moyen d'une bielle (99), qui est logée de façon rotative sur une partie d'excentrique (81) de l'arbre de moteur (80) et est logée de façon rotative à distance sur le support de piston (86).

50. Dispositif de réglage d'air comprimé selon l'une quelconque des revendications 37 à 49,
**caractérisé en ce que**
le second espace de pression (25) en liaison avec le boîtier (13) et l'entrée d'air (17) est commandé au moyen d'une vanne de surpression (110), qui ouvre lors d'une pression dans le second espace de pression (25) qui est supérieure à la pression dans l'entrée d'air (17).

51. Dispositif de réglage d'air comprimé selon l'une quelconque des revendications 37 à 50,
**caractérisé en ce que**
le boîtier (50) du compresseur (15) contient à distance au-dessous du second espace de cylindre (25) un canal (85) débouchant dans l'espace d'aspiration (26), canal auquel est raccordé le canal d'évacuation (23) avec l'ouverture de sortie (24).

52. Dispositif de réglage d'air comprimé selon l'une quelconque des revendications 37 à 51,
**caractérisé en ce que**
le compresseur (15) est réalisé de telle sorte qu'une pression de l'ordre de 1 à 10 bars est générée dans le premier espace de pression (91) et une pression de l'ordre de 8 à 40 bars est générée dans le second espace de pression (25).

53. Dispositif de réglage d'air comprimé selon l'une quelconque ou plusieurs des revendications précédentes,
**caractérisé en ce que**
le déshydrateur d'air (12) est relié aussi bien lors du remplissage que lors du vidage directement à l'élément de raccordement.

54. Dispositif de réglage d'air comprimé selon la revendication 53,
**caractérisé en ce que**
le premier distributeur à voies (19) contrôlable est raccordé lors du vidage directement à l'entrée d'air (17) du déshydrateur d'air (12) et permet un abaissement rapide de la pression et/ou un abaissement commandé de la pression.

55. Dispositif de réglage d'air comprimé selon la revendication 53 ou 54,
**caractérisé en ce que**
le premier distributeur à voies (19) contrôlable est contrôlable de façon pneumatique, et son entrée de commande (27) est raccordée directement à la sortie de commande pneumatique du second distributeur à voies (20) contrôlable.

56. Dispositif de réglage d'air comprimé selon la revendication 55,
**caractérisé en ce que**
l'entrée de commande (27) pneumatique du premier distributeur à voies (19) contrôlable est reliée lors du vidage au moyen d'une conduite d'agent de pression (1) directement au déshydrateur d'air (12) et est alimentée avec la pression dans l'élément de raccordement.

57. Dispositif de réglage d'air comprimé selon la revendication 55 ou 56,
**caractérisé en ce que**
l'entrée de commande. (27) pneumatique du premier distributeur à voies (19) contrôlable peut être alimentée lors du vidage contre l'effet d'une force de rappel agissant sur l'entrée de commande (27) pneumatique, avec la pression dans l'élément de raccordement.
